# EUROPEAN PATENT APPLICATION

(11) **EP 3 843 322 A1**
(43) Date of publication of application: **30.06.2021**
(21) Application number: 20198333.5
(22) Date of filing: 25.09.2020
(51) Int. Cl.: H04L 9/08, G06F 21/78

(54) **METHOD AND APPARATUS FOR MULTI-KEY TOTAL MEMORY ENCRYPTION BASED ON DYNAMIC KEY DERIVATION**

(30) Priority: 27.12.2019 US 201916728712
(71) Applicant: INTEL Corporation, Santa Clara, CA 95054 (US)
(72) Inventor: KHOSRAVI, Hormuzd M., Portland, OR Oregon 97229 (US); CHHABRA, Siddhartha, Portland, OR Oregon 97229 (US); VON BOKERN, Vincent, Rescue, CA California 95672 (US); HUNTLEY, Barry E., Hillsboro, OR Oregon 97124 (US); SHANBHOGUE, Vedvyas, Austin, TX Texas 78738 (US); MASTI, Ramya Jayaram, Hillsboro, 97124 (US)
(74) Representative: Samson & Partner Patentanwälte mbB

(57) **Abstract**

Disclosed embodiments relate to Multi-Key Total Memory Encryption based on dynamic key derivation. In one example, a processor includes cryptographic circuitry, storage with multiple key splits and multiple full encryption keys, fetch and decode circuitry to fetch and decode an instruction specifying an opcode, an address, and a keylD, the opcode calling for the processor to use the address to determine whether to use an explicit key, in which case the keylD is used to select one of the multiple full encryption keys to use as a cryptographic key, and, otherwise, the processor is to dynamically derive the cryptographic key by using the keylD to select one of the multiple key splits, and provide the key split and a root key to a key derivation function to derive the cryptographic key, which is used by the encryption circuitry to perform a cryptographic operation on an the addressed memory location.

## Description

### FIELD OF THE INVENTION

The field of invention relates generally to computer processor architecture, and, more specifically, to a method and apparatus for Multi-Key Total Memory Encryption (MKTME) based on dynamic key derivation.

### BACKGROUND

The increasing demand for robust computer security has led to widespread use of cryptography in mainstream computer systems and networks. For example, disk encryption can be used to protect data residing on a persistent disk storage device, while network encryption can be used to protect data transmitted over a network.

A data processing system may use virtual machines (VMs) to provide distinct execution environments for distinct software stacks. The software for managing VMs within a data processing system may be referred to as a hypervisor or a virtual machine monitor (VMM). A data processing system that executes a VMM may be referred to as a host. By contrast, the contents of a VM may be referred to as a guest.

A VM server may provide for protected memory regions for VMs. A VM server can includes one or more processors in communication with a memory manager that includes a cryptographic engine to encrypt data traveling from the processor(s) to memory, and to decrypt data returning to the processor(s) from memory.

As a benefit, a VM server may support hundreds and thousands of virtual machines, each having a unique encryption key distinct from other virtual machines. Unfortunately, however, storing one or more encryption keys for each of the virtual machines requires a significant amount of memory, which comes with significant cost and power utilization.

### BRIEF DESCRIPTION OF THE DRAWINGS

The present invention is illustrated by way of example and not limitation in the figures of the accompanying drawings, in which like references indicate similar elements and in which:
Figure **1** illustrates a device equipped with memory and storage encryption in a cryptographic protection system; according to some embodiments;
**Figure 2** is a block diagram illustrating an embodiment of a circuit for deriving a key;
Figure **3** is a block flow diagram illustrating a process for deriving a key, according to some embodiments;
**Figure 4** illustrates a format of an encryption instruction, according to some embodiments;
**Figure 5** is an example of a PCONFIG instruction to configure a protected domain;
**Figure 6** is a block diagram illustrating processing components for executing instructions, according to some embodiments;
**Figures 7A-7B** are block diagrams illustrating a generic vector friendly instruction format and instruction templates thereof according to some embodiments of the invention;

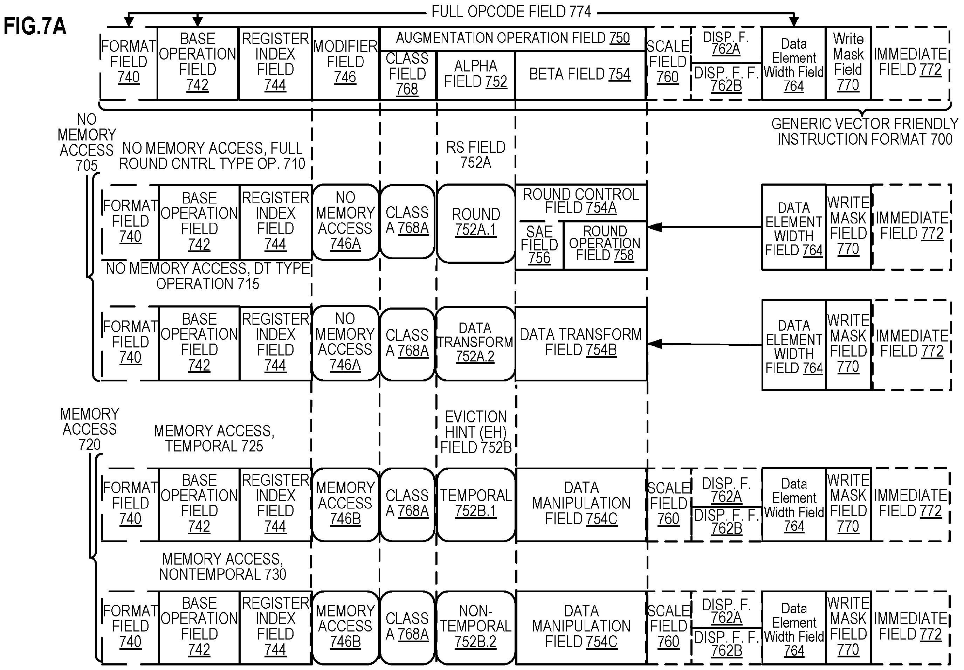

**Figure 7A** is a block diagram illustrating a generic vector friendly instruction format and class A instruction templates thereof according to some embodiments of the invention;

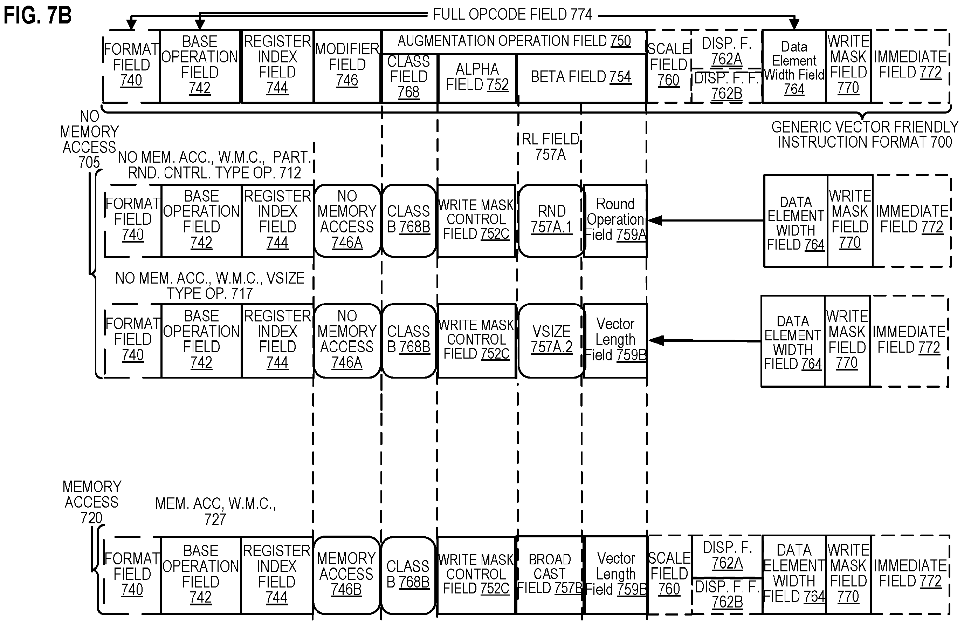

**Figure 7B** is a block diagram illustrating the generic vector friendly instruction format and class B instruction templates thereof according to some embodiments of the invention;

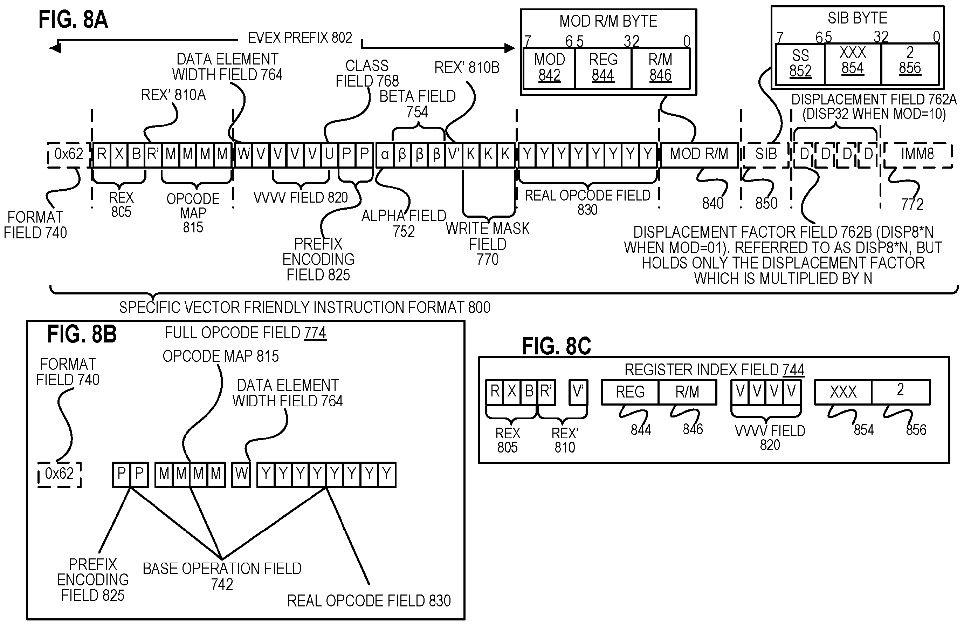

**Figure 8A** is a block diagram illustrating an exemplary specific vector friendly instruction format according to some embodiments of the invention;
**Figure 8B** is a block diagram illustrating the fields of the specific vector friendly instruction format that make up the full opcode field according to one embodiment;
**Figure 8C** is a block diagram illustrating the fields of the specific vector friendly instruction format that make up the register index field according to one embodiment;

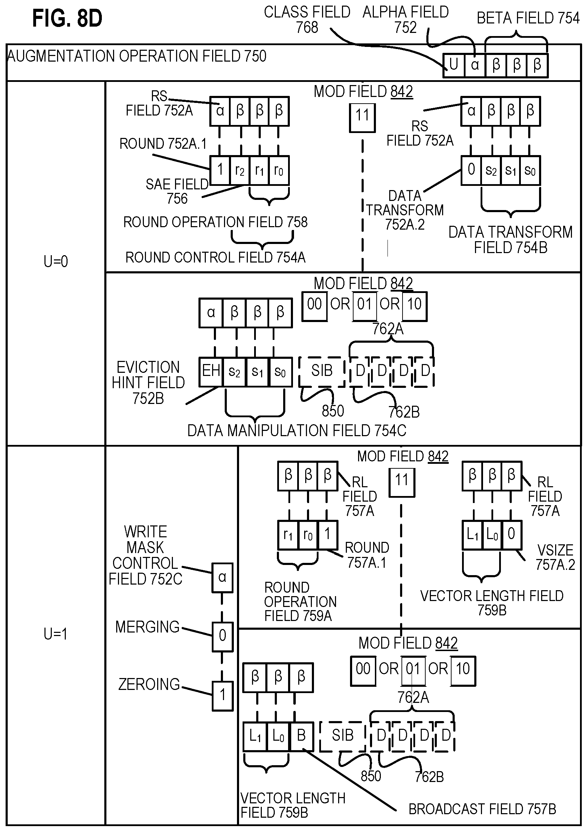

**Figure 8D** is a block diagram illustrating the fields of the specific vector friendly instruction format that make up the augmentation operation field according to one embodiment;

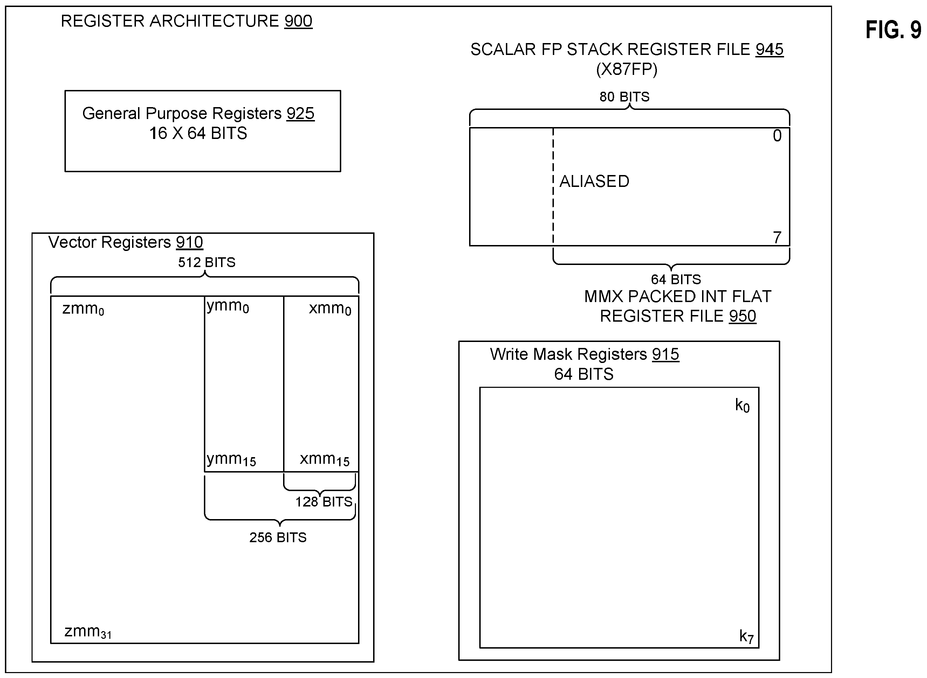

**Figure 9** is a block diagram of a register architecture according to one embodiment;

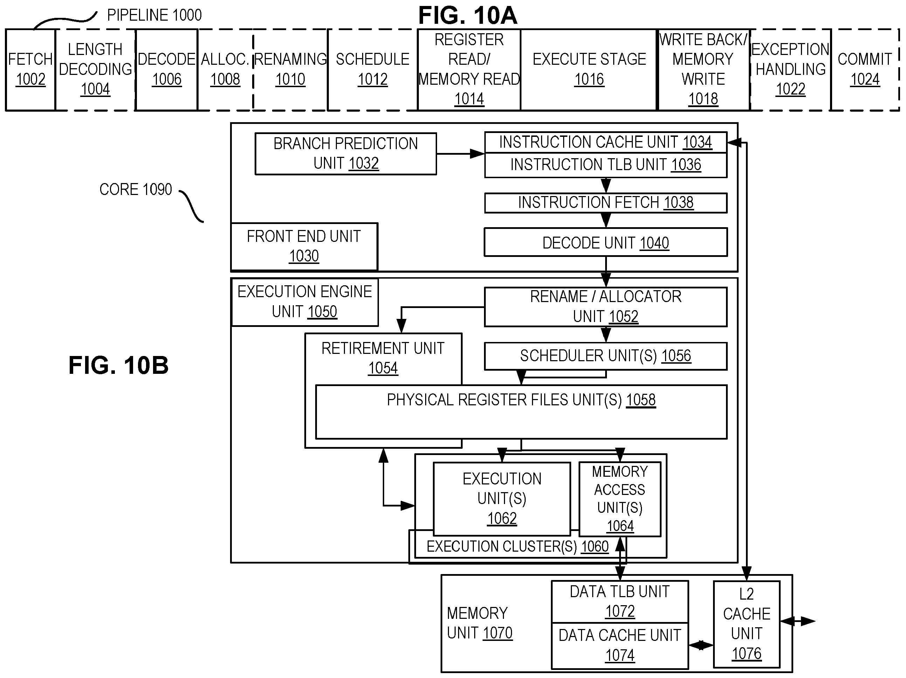

**Figure 10A** is a block diagram illustrating both an exemplary in-order pipeline and an exemplary register renaming, out-of-order issue/execution pipeline according to some embodiments;
**Figure 10B** is a block diagram illustrating both an exemplary embodiment of an in-order architecture core and an exemplary register renaming, out-of-order issue/execution architecture core to be included in a processor according to some embodiments;

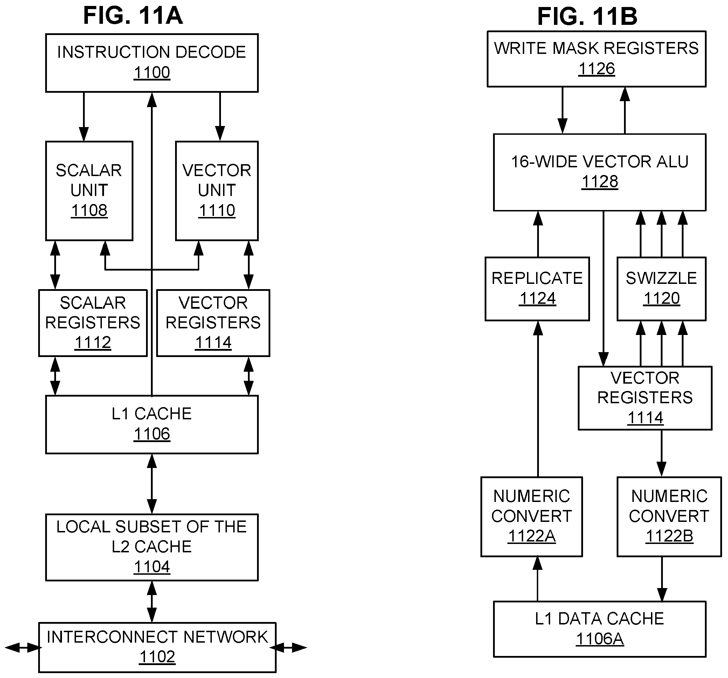

**Figures 11A-B** illustrate a block diagram of a more specific exemplary in-order core architecture, which core would be one of several logic blocks (including other cores of the same type and/or different types) in a chip;
**Figure 11A** is a block diagram of a single processor core, along with its connection to the on-die interconnect network and with its local subset of the Level 2 (L2) cache, according to some embodiments;
**Figure 11B** is an expanded view of part of the processor core in **Figure 11A** according to some embodiments;

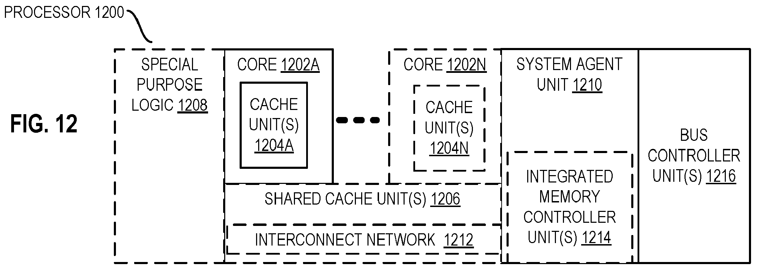

**Figure 12** is a block diagram of a processor that may have more than one core, may have an integrated memory controller, and may have integrated graphics according to some embodiments;

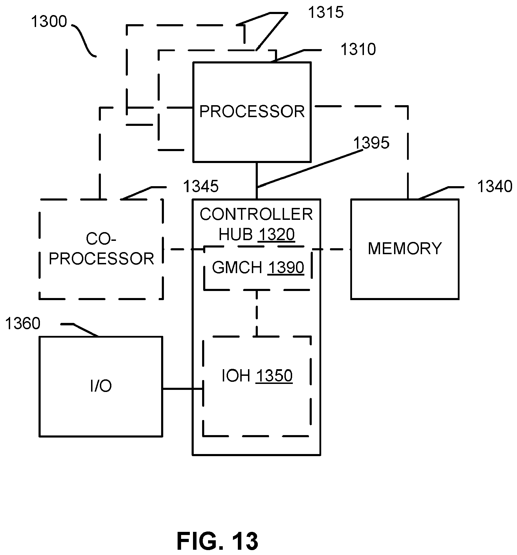

**Figures 13-16** are block diagrams of exemplary computer architectures;
**Figure 13** shown a block diagram of a system in accordance with some embodiments;

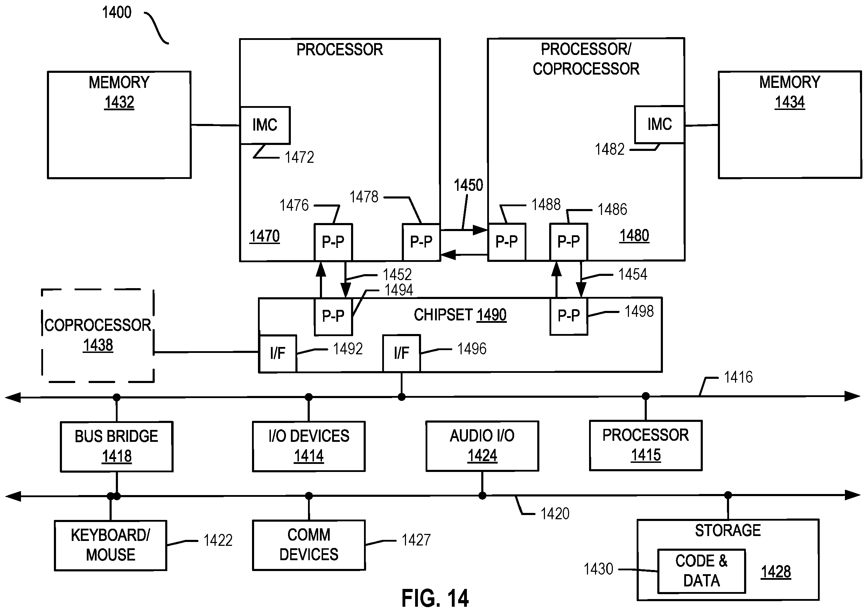

**Figure 14** is a block diagram of a first more specific exemplary system in accordance with some embodiment;

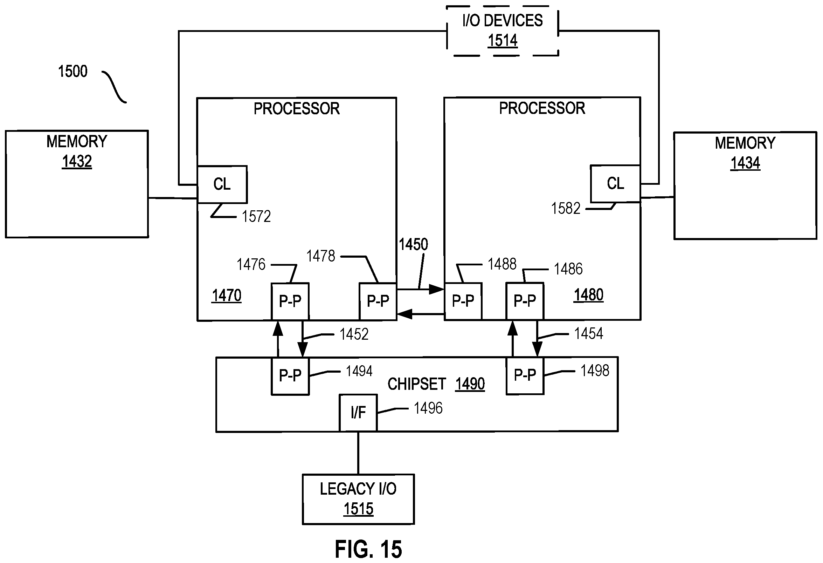

**Figure 15** is a block diagram of a second more specific exemplary system in accordance with some embodiments;

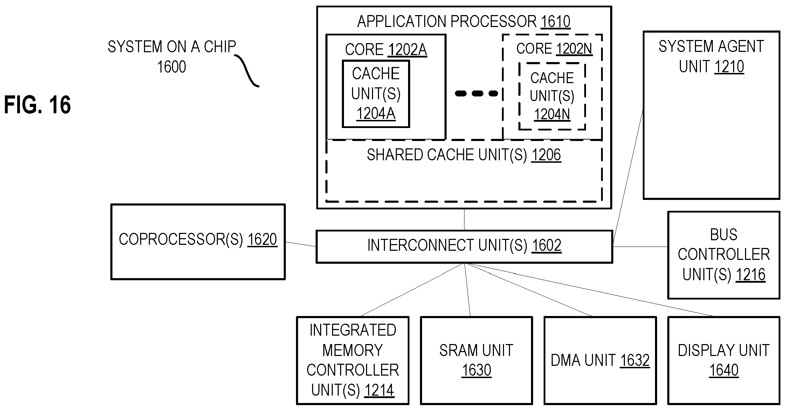

**Figure 16** is a block diagram of a System-on-a-Chip (SoC) in accordance with some embodiments; and

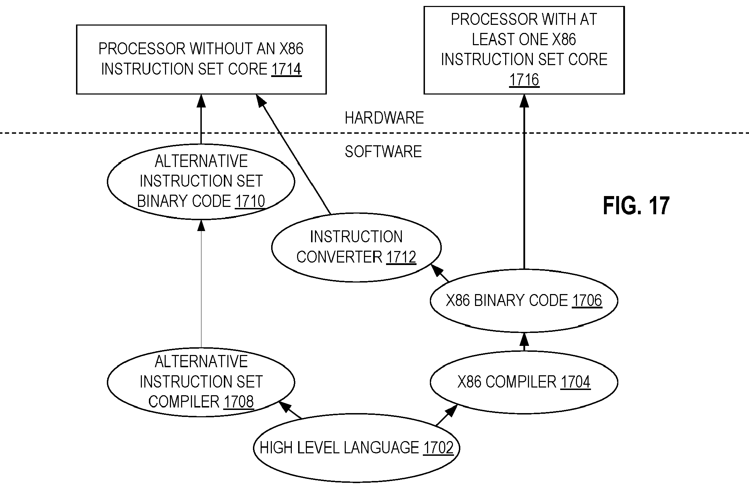

**Figure 17** is a block diagram contrasting the use of a software instruction converter to convert binary instructions in a source instruction set to binary instructions in a target instruction set according to some embodiments.

### DETAILED DESCRIPTION OF THE EMBODIMENTS

In the following description, numerous specific details are set forth. However, it is understood that some embodiments may be practiced without these specific details. In other instances, well-known circuits, structures, and techniques have not been shown in detail in order not to obscure the understanding of this description.

References in the specification to "one embodiment," "an embodiment," "an example embodiment," etc., indicate that the embodiment described may include a feature, structure, or characteristic, but every embodiment may not necessarily include the feature, structure, or characteristic. Moreover, such phrases are not necessarily referring to the same embodiment. Further, when a feature, structure, or characteristic is described about an embodiment, it is submitted that it is within the knowledge of one skilled in the art to affect such feature, structure, or characteristic about other embodiments if explicitly described.

As mentioned above, an ever-growing demand exists to make systems secure, especially as more and more enterprise data is moving to the Cloud. Security technologies include total memory encryption (TME), where data moving to memory from the core is encrypted and decrypted on its way back to the core in hardware. MK-TME (Multi-key TME) is an enhancement to TME that allows use of multiple keys (the number of supported keys is implementation-dependent) and software configurable to allow different pages to be encrypted using different keys. In some embodiments, for example in a cloud service provider (CSP) context, MKTME can achieve the cryptographic isolation between different CSP workloads.

Disclosed embodiments of the invention provide a method to derive the encryption keys required for MKTME dynamically/on-the-fly, rather than to store the keys in a cache. Disclosed embodiments thus provide an advantage of addressing this hardware cache/die size/cost issue, without sacrificing performance.

In alternate, inferior MKTME approaches, all encryption and tweak keys are stored in a hardware cache on the processor. In other words, the entire set of available keys are stored within the encryption engines, requiring storage equal to (Number of Keys x full size of key). However, as the encryption key size increases, say from 128 bits to 256 bits, and the number of keys increases, say from 64 to 256 and beyond, the size requirements for the hardware cache/SRAM increase dramatically. The full size of the key could be 128b or 256b for a primary AES key, and may also include a 128 or 256b tweak key if the encryption algorithm requires one.

Advantageously, disclosed embodiments allow for a subset of the available keys (and in some implementations, all of the available keys) to be stored using substantially fewer storage elements. In particular, disclosed embodiments establish one, or a small number of root keys (RK1, RK2, etc.) which include the full desired entropy (128 or 256 bits). Then, for each unique symmetric, encryption key (EK1, EK2, etc.) needed, store a "key split" or "salt" value (KS1, KS2, etc.) that is used with a Key Derivation Function in order to recover the encryption key.

In operation, in some embodiments, as read and write cycles arrive at the memory controller, they are accompanied by a KeylD. In alternate approaches, the KeylD is used as an index to directly look up a corresponding key value. With disclosed embodiments, however, the KeylD is used as an index to look up a Key Split value, which is then routed into a Key Derivation Function (KDF) to recover the encryption key. The KDF operation is completed while the read cycle is being completed on the memory interface, so when the ciphertext is returned, the encryption key is available to decrypt the data with no additional latency. The output of the KDF could be used as either the encryption key or decryption key based on time budget available to perform the transformation. The transformation is needed on either the read or write path.

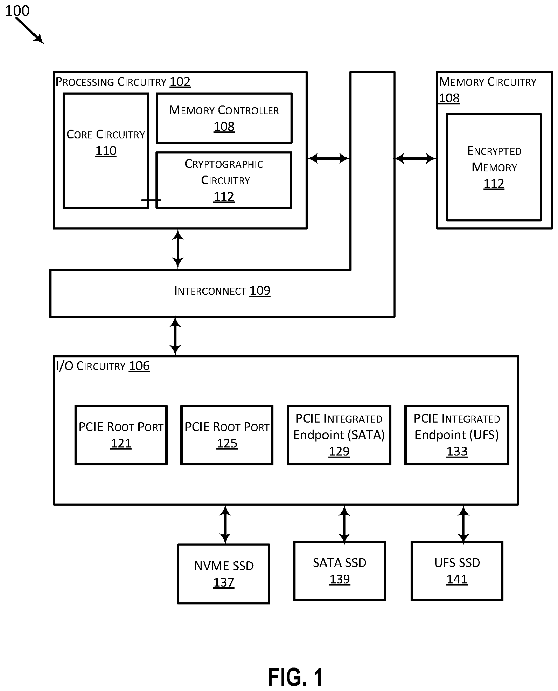

**Figure 1** illustrates an example of a computing system to provide encryption of data for storing in memory and storage devices in accordance with disclosed embodiments. In one embodiment, computing system 100 is a system on a chip (SOC). While computing system 100 has been illustrated as contiguous in FIG. 1, a system consistent with disclosed embodiments can actually be made up of separate devices (e.g., coupled via wired or wireless communication). As shown, computing system 100 includes processing circuitry 102, memory circuitry 104, I/O circuitry 106, and interconnect 109. In operation, processing circuitry 102 performs actions that manipulate data stored in memory circuitry 104. I/O circuitry 106 generates data (e.g., from user interaction) or receives data (e.g., from a network source or storage device) to store in memory circuitry 104, for example, via direct memory access (DMA) requests generated by memory circuitry 104. Interconnect 109 includes interconnect fabric circuitry to control how data is conveyed on the bus or buses that couple processing circuitry 102, memory circuitry 104 and I/O circuitry 106. For example, in a Peripheral Component Interconnect Express (PCIe) system, interconnect 109 includes at least one port and a switch fabric made up of switch devices to generate transaction requests for processing circuitry 102. Note that interconnect 109 may also include a point-to-point link from the processing circuitry 102 to the memory circuitry 108.

Processing circuitry 102 includes memory controller 108, core circuitry 110 and encryption circuitry 112. Memory controller 108 controls access to read data from and/or write data to memory circuitry 104. Core circuitry 110 includes at least one processing core to process data stored in memory circuitry 104 and/or one or more caches (not shown). Cryptographic circuitry 112 is configured to encrypt plaintext data (e.g., unencrypted data) prior to storage in memory circuitry 104, and to decrypt previously encrypted data prior to the data being processed by core circuitry 110, the data being DMA'ed to another location in computing system 100, stored in a storage device, etc. In an embodiment, cryptographic circuitry 112 includes circuitry implementing TME (Total Memory Encryption) and/or MKTME (Multi-Key Total Memory Encryption).

In operation, memory controller 108 and interconnect 109 control the data flowing from core circuitry 110 and/or I/O circuitry 106 to memory circuitry 104, and vice versa. When performing this function, memory controller 108 routes data to be stored in memory circuitry 104 through cryptographic circuitry 112, as appropriate, to be encrypted prior to storage in memory circuitry 104, or causes cryptographic circuitry 112 to be skipped when the data has already been encrypted. In this manner, the memory controller ensures that redundant encryption is avoided. Memory controller 108 routes data received from memory circuitry 104 through cryptographic circuitry 112 to decrypt encrypted data as directed. Decrypted data can be processed by core circuitry 110 or transferred over an I/O interface via I/O circuitry 106. In some cases, memory controller 108 leaves the data in encrypted form before transferring the encrypted data over an I/O interface via I/O circuitry 106.

Memory 104 may allow for protection at runtime for lower privilege software like an OS, applications, utilities, drivers, etc. In at least one embodiment, data within memory 104 may be encrypted as encrypted memory 112 according to TME and MKTME techniques implemented in processing circuitry 102 (including cryptographic circuitry 112) in known ways. TME may encrypt at least a portion of memory 104 (e.g., physical memory) of computing system 100 as encrypted memory 112. Encrypted memory 112 may protect against lost or stolen systems (e.g., wherein an attacker has physical access to the system) being compromised. In this scenario, without the memory being encrypted, an attacker may be able to retrieve sensitive user information including, for example, keys used for disk decryption of data in storage devices.

In some implementations supporting TME/ MKTME where the device is a SoC (System on a Chip), an encryption engine is in the direct data path to external memory buses and therefore all of the memory data entering and/or leaving the device on memory buses is encrypted. The data inside the device (in caches, etc.) remains plain text and therefore supports existing software and I/O models.

In this case, the data is transferred in plain text to the processing circuitry 102 and I/O circuitry 106 over interconnect 109. In some embodiments, the OS (Operating System) or other software being executed by processor circuitry 102 are not involved in controlling the encryption or decryption of data being transferred between memory circuitry 104, processing circuitry 102, interconnect 109, I/O circuitry 106, and storage devices.

I/O circuitry 106 includes PCIe root port 121, PCIe root port 125, and is attached to a non-volatile memory express (NVMe) solid-state drive (SSD) 137, PCI integrated endpoint for a serial AT attachment (SATA) 129 attached to a SATA SSD 139, PCI integrated endpoint for a universal flash storage (UFS) 133 attached to UFS SSD 141, and so on. Although only a few examples of I/O interfaces and storage devices are shown in **Figure 1****,** it is understood that there may be any number of I/O interfaces and storage devices, or any types, in any given device.

In an embodiment, when processing circuitry 102 is a SOC, the storage devices may be external to the SOC. Since control of encryption and decryption is managed by memory controller 108, in embodiments of the present invention there is no need for any involvement or intervention by the OS. Thus, device performance is improved along with overall device security.

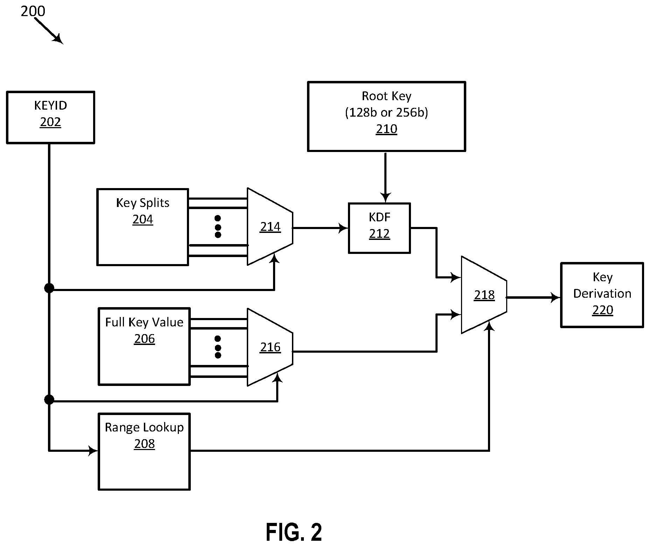

**Figure 2** is a block diagram illustrating an embodiment of a circuit for deriving a key. As shown, circuit 200 receives KeylD 202 as an input. Circuit 200 includes storage for a set of key splits 204 and a set of explicit keys stored in full key storage 206. In one embodiment, a computing system partitions key space for multi-key total memory encryption (MKTME) into a set of "explicit keys," for example, as stored in full key storage 206, and a set of "derived keys," for example, to be derived based on key splits stored in key split storage 204. Use of key split storage 204 provides advantages as to silicon area cost and power utilization because, as described below, much less storage is required. Because the key space is partitioned this way, KeylD 202 is routed to range lookup 208 to determine if the KeylD corresponds to an explicit key or a derived key. If the KeylD corresponds to an explicit key, then KeylD 202 is used as an index into selector 216 to select the correct full encryption key. Selector (e.g., multiplexer 218 routes either the explicit or the derived key to key derivation output 220.

But, if the range lookup 208 determines that KeylD 202 selects a derived key, then KeylD 202 is used as an indexes into selector 214 to select the correct Key Split, which, together with root key 210, is fed into a key derivation function, KDF 212, to derive the corresponding encryption key. As used hereinafter, KDF 212 can be said to "restore" or "generate" or "calculate" the encryption key.

The Key Split size in some embodiments is 48-64b. The optimal size will depend on system properties. Compared to storing full 256b primary and tweak keys, storing only the key split can provide a potential advantage of significant reduction in required storage. If a small number of keys are supported, the area saved will not exceed the area of the required cryptographic engines to perform the KDF. However, as the number of keys grows, a crossover point will be passed where the storage savings outweighs the incremental area for the crypto engines.

### CHOICE OF KEY DERIVATION FUNCTION

As mentioned above, a variety of functions can be used as the function implemented by KDF 212.

Some embodiments, for example, use an XTS-AES encryption function. (XTS refers to XEX-based tweaked-codebook mode with ciphertext stealing, and AES refers to Advanced Encryption Standard), as described and standardized by the Institute of Electrical and Electronics Engineers (15) as publication I5 P1916/D16. XTS-AES is a tweakable block cipher that can be used for encryption of sector-based storage. XTS-AES acts on data units of 128 bits or more and uses the AES block cipher as a subroutine. The key material for XTS-AES consists of a data encryption key (used by the AES block cipher) as well as a "tweak key" that is used to incorporate the logical position of the data block into the encryption. XTSS is a concrete instantiation of the class of tweakable block ciphers described in reference [XEX04]. The XTS-AES addresses threats such as copy-and-paste and dictionary attacks, while allowing parallelization and pipelining in cipher implementations. Some embodiments that encrypt using XTS-AES actually perform two KDF operations in parallel in KDF 212: one to restore a primary encryption key and one to restore a tweak key.

In other embodiments, the KDF 212 uses NIST SP800-108 as described and standardized by the National Institute of Standards and Technology (NIST). In some embodiments, when 212 derives a key using NIST SP800-108, the key split size is 48-64b. The optimal size will depend on system properties.

Advantageously, compared to storing full 256b primary and tweak keys, storing only the key split provides a roughly 10x reduction in required storage. If a small number of keys are supported, the area saved will not exceed the area of the required crypto engines to perform the KDF. However, as the number of keys grows, a crossover point will be passed where the storage savings outweighs the incremental area for the crypto engines.

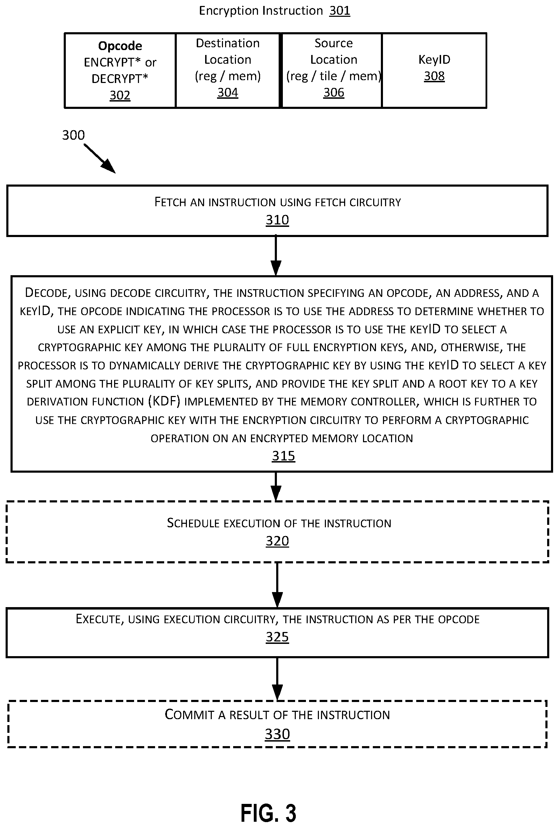

**Figure** 3 is a block flow diagram illustrating a process for deriving a key, according to some embodiments. In an embodiment, flow 300 is executed by a processor having a memory controller to use cryptographic circuitry to encrypt and decrypt data, and storage to store multiple key splits and multiple full encryption keys. Flow 300 begins at operation 310, during which the processor is to use fetch circuitry to fetch an instruction. At operation 315, the processor is to use decode circuitry decode the instruction.

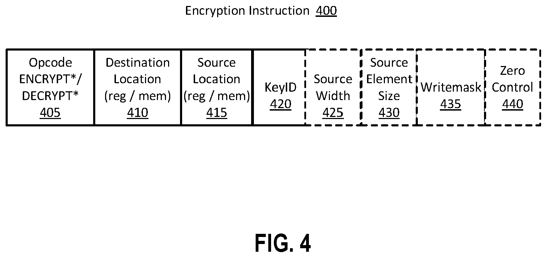

An example of the instruction is shown as encryption instruction 301. A format of the encryption instruction is further illustrated and described with respect to **Figures 4****,** **7A-B****,** and **8A-D.** As shown, encryption instruction 301 includes fields specifying an opcode 302, a destination location 304, a source location 306, and a keylD 308. In some embodiments, as here, opcode 302 indicates the processor is to use the source location 306 (e.g., an address) to determine, for example by using range lookup 208, whether to use an explicit key, in which case the processor is to use keylD 308 to select a cryptographic key among the multiple full encryption keys, for example full-encryption-key storage 206 **(****Figure 2****).** Otherwise, the processor is to dynamically derive the cryptographic key by using the keylD to select a key split among the multiple key splits in storage 204. In the case of a derived encryption key, the opcode further calls for the processor to provide the key split and a root key to a key derivation function (KDF), for example KDF 212, implemented by the memory controller.

In some embodiments, at operation 320, the processor is to schedule execution of the instruction. In some embodiments, at operation 330, the processor is to commit a result of the execution. Operation 320 is optional, as indicated by its dashed border, insofar as the operation might occur at a different time, or not at all.

Opcode 302 further calls for the processor to use the cryptographic key with the encryption circuitry to perform a cryptographic operation on an encrypted memory location. At operation 325, the processor is to execute the instruction, using execution circuitry, as per the opcode.

In some embodiments, at operation 330, the processor is to commit a result of the execution. Operation 330 is optional, as indicated by its dashed border, insofar as the operation might occur at a different time, or not at all.

**Figure 4** illustrates a format of an encryption instruction, according to some embodiments. As shown, encryption instruction 400 includes fields to specify opcode 405, destination location 410, source location 415, and keylD 420. Encryption instruction 400 has several optional fields, including, a few optional fields shown as: source width 425, source element size 430, writemask 435, and zero control 440. Optional fields of encryption instruction 400 are shown with dashed borders.

In some embodiments, opcode 405 calls for either an encryption or a decryption operation. The opcodes of 405 are shown including an asterisk, which indicates that additional prefixes or suffixes can be added to the opcode to further specify different instruction behaviors.

Source location 415 and destination location 410 can each specify either a memory location, for example specifying a vector having contiguously-stored elements starting at a memory address, or a register location, for example a vector register, such as the xmm, ymm, and zmm vector registers if **Figure 9****.**

KeylD 420 can be a scalar value specifying a keylD to be used in executing disclosed algorithms, for example, as illustrated and described in **Figure 3****.** In some embodiments, keylD 420 can specify a register location where the scalar value to be used is stored.

As shown, optional fields include source width 425, which is to specify a width of registers and/or memory locations where the source and destination are located, source element size 430, which is to specify a width of each element of the source vector, be it 2 bits, 4 bits, 8 bits, 16 bits, 32 bits, 64 bits, etc., writemask 435, which is either a multi-bit field or identifies a multi-bit writemask register, in which each of the bits controls whether a corresponding destination element is to be updated after execution, or whether the corresponding element is masked, and zero control 440 specifies whether masked destination elements are to be zeroed, or to retain their previous values.

### CONFIGURING CRYPTOGRAPHY IN PROTECTED DOMAINS

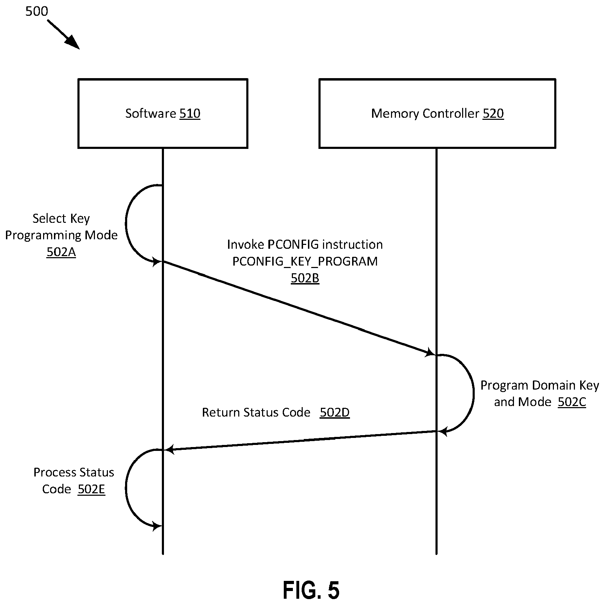

In some embodiments, protected domains may be defined and/or configured using a processor instruction implemented by processing circuitry 102, such as the "platform configuration" (PCONFIG) instruction described in connection with **Figure 5** and throughout this disclosure. The PCONFIG instruction, for example, may be used to define and/or configure a protected domain by programming a new entry-or modifying an existing entry-in key tables (e.g., 204 and 206 of **Figure 2**) in memory controller 108. In this manner, protected domains can be defined and configured programmatically (e.g., by management software) using the PCONFIG instruction.

In some embodiments, a processor implements an instruction that can be used to configure the protected domains associated with a memory protection system. For example, the processor instruction could be a "platform configuration" (PCONFIG) instruction, a "trusted platform action supervisor" (TPAS) instruction, and/or any other suitable type of instruction.

A "platform configuration" (PCONFIG) instruction can be used to define and/or configure a protected domain by programming a new entry-or modifying an existing entry-in a domain key table of a memory protection controller (e.g., key tables, such as 204 and 206 of **Figure 2****,** in memory controller 108 of **Figure 1**). In this manner, protected domains can be defined and configured programmatically using the PCONFIG instruction. Once a protected domain has been configured using the PCONFIG instruction, memory addresses associated with the protected domain are protected in the manner specified by the configuration for the protected domain. For example, in some embodiments, when using encryption protection, data is encrypted before being written to memory addresses within the protected domain, and data read from memory addresses within the protected domain is decrypted before being returned to the requesting processor.

In some embodiments, the PCONFIG instruction requires a certain privilege level or privilege ring. For example, the processor may support a hierarchy of privilege levels or privilege rings to restrict access to certain resources. In some embodiments, privilege ring 0 is the least restrictive level, while privilege rings with higher numbers are increasingly more restrictive. For example, privilege ring 0 may be used for system management software (e.g., the operating system kernel and device drivers), while privilege ring 3 may be used for userland applications. Accordingly, in some embodiments, the PCONFIG instruction is a ring-0 instruction that can only be used by software executing in the highest privilege ring (e.g., management software used to configure protected domains). Alternatively, or additionally, the PCONFIG instruction may be a ring-3 instruction that can be used by any user application to configure its own protected domain.

**Figure 5** illustrates an example call flow 500 associated with the PCONFIG instruction. The illustrated example identifies the call flow 500 between software 510 performing domain configuration using the PCONFIG instruction, for example, by memory controller 108 **(****Figure 1****),** which may include any engine, controller, or other component that provides cryptographic memory protection. Software 510 may include any software used to configure the domains protected by memory controller 108 **(****Figure 1****),** such as an operating system, a hypervisor, a virtual machine manager and/or other management software. The illustrated call flow begins by software 510 selecting a key programming mode for programming an encryption key for a particular domain (call 502a). For example, as illustrated and described with respect to **Figures 2** and **3****,** software 510 may select a full encryption key for the domain, or may call for a key to be derived by a key derivation function. Software 510 may then issue the PCONFIG processor instruction to memory controller 520 to perform the domain configuration (call 502b). When the PCONFIG instruction is invoked, memory controller 108 **(****Figure 1****)** programs the key and protection mode for the particular domain (call 502c). Memory controller 108 **(****Figure 1****)** then returns a status code to software 510 (call 502d), and the status code is then processed by software 510 (call 502e).

In some embodiments, the PCONFIG instruction supports various leaf functions for configuring and managing protected domains. When the PCONFIG instruction is executed, for example, the particular leaf function to invoke may be specified in a hardware register (e.g., the EAX register). The parameters used by a particular leaf function may also be specified in hardware registers (e.g., the RBX/RCX/RDX registers).

**TABLE 1** illustrates an example of PCONFIG leaf encodings that could be used to enable support for multiple leaf functions. Although only one leaf function is defined (the KEY_PROGRAM leaf), additional leaf functions can be defined using the reserved leaf encodings in order to extend the functionality of the PCONFIG instruction.

**TABLE 1: PCONFIG Leaf Function Encodings**

| **LEAF** | **ENCODING** | **DESCRIPTION** |
|---|---|---|
| KEY_PROGRAM | 0x00000000 | This leaf function is used to program the key associated with a domain. |
| OTHER | 0x00000001-0x66FF | Additional leaf functions can be defined using these reserved leaf encodings for future extensions to the functionality of the PCONFIG instruction. |

The key program leaf function (KEY_PROGRAM) of the PCONFIG instruction can be used to program a key for a protected domain. In some embodiments, the parameters used by the key program leaf function are specified in a key program structure (KEY_PROGRAM_STRUCT), and the address of the key program structure is specified in a hardware register (e.g., the RBX register). **TABLE 2** illustrates an example embodiment of the key program structure (KEY_PROGRAM_STRUCT).

**TABLE 2: Key Program Structure (KEY_PROGRAM_STRUCT)**

| **FIELD** | **SIZE (bytes)** | **DESCRIPTION** |
|---|---|---|
| KEYID | 1 | This field identifies the key ID of a domain that is being programmed. |
| KEYID_CMD | 1 | This field identifies a key programming command. |
| KEYID_ENC_ALG | 2 | This field may be used to select an encryption algorithm to use for the domain (based on the available encryption algorithms). |
| KEYID_KEY | 16 | This field may identify an encryption key for the domain. |
| KEYID_TWEAK_KEY | 16 | This field may identify a tweak key value. |

As shown in **TABLE 2,** the key program structure identifies the key ID of the particular domain being programmed, and it also specifies a key programming command. In some embodiments, for example, the key program leaf function supports multiple key programming commands, and the desired command is specified in the key program structure. Moreover, in some embodiments, the key program structure also includes reserved field(s) that can be used for subsequent extensions to the key program leaf function.

**Table 3** shows another exemplary KEY_PROGRAM_STRUCT for use with a PCONFIG instruction to bind a key to a keylD.

**TABLE 3: Key Program Structure (KEY_PROGRAM_STRUCT)**

| **Field** | **Offset (bytes)** | **Size (bytes)** | **Comments** |
|---|---|---|---|
| KEYID | 0 | 2 | Key Identifier |
| KEYID_CTRL | 2 | 4 | KeylD control: |
| | | | Bits [7:0]: COMMAND |
| | | | Bits [23:8]: ENC_ALG |
| | | | Bits [31:24]: RSVD, MBZ |
| RSVD | 6 | 58 | RSVD |
| KEY_FIELD_ 1 | 64 | 64 | SW- supplied KeylD data key or entropy for KeylD data Key |
| KEY_FIELD_ 2 | 128 | 64 | SW-supplied tweak key or entropy for KeylD tweak Key |

**TABLE 4** illustrates examples of key programming commands that may be supported by the key program leaf function.

**TABLE 4: Key Programming Commands**

| **KEY DOMAIN (KD) COMMAND** | **CODE** | **DESCRIPTION** |
|---|---|---|
| Set Key Direct (KD_SET_KEY _DIRECT) | 0 | This command sets the key for a domain directly using the key specified in the key program structure (KEY_PROGRAM_STRUCT). The key is provided by the software that initiates this key programming command. The domain is then protected in custom encryption mode. |
| Set Key Random (KD_SET_KEY _RANDOM) | 1 | This command sets the key for a domain using a randomly generated key. For example, a key may be randomly generated by a processor and/or a random number generator, and thus may not be known by (or shared with) the software that initiates the key programming command. The domain is then protected in custom encryption mode. |
| Clear Key (KD_CLEAR_KEY) | 2 | This command clears the key that was previously set for a domain. The domain is then protected in default encryption mode. |
| No Key (KD_NO_KEY) | 3 | This command disables memory encryption for a domain. The domain is then protected in plaintext mode. |

**Table 5** is another exemplary listing of key programming commands for use in conjunction with a PCONFIG command. In contrast to the exemplary listing of Table 4, the listing in Table 5 includes a command, at encoding equal to 4, to set the key dynamically, which can be used, for example, to execute the encryption instruction as illustrated in **Figures 2** and **3****.**

**TABLE 5: Key Programming Commands**

| Command | Code | Description |
|---|---|---|
| KEYID_SET_KEY DIRECT _ | 0 | Set key domain key using the key provided (direct mode) |
| KEYID_SET_KEY _RANDOM | 1 | Set key domain key randomly, Key generated by CPU and is not available to SW. The algorithm used to generate this key is similar to TME key generation algorithm |
| KEYID_CLEAR _KEY | 2 | Clear the key associated with the domain. If a key is cleared, this KEYID gets TME behavior |
| KEYID_NO_KEY | 3 | No cryptographic encryption provided by MKTME for KEYID |
| KEYID_SET_KEY_ DYNAMIC | 4 | The programming contains a key salt, data and tweak key associated with the KEYID will be generated dynamically |

In order to support dynamically derived keys with according to disclosed embodiments, an additional command is invoked: KEYID_SET_KEY_DYNAMIC. Software sets up the exemplary KEY_PROGRAM_STRUCT illustrated in **Table 6** for use in conjunction with a PCONFIG instruction to indicate to the MKTME engine that the keys associated with the KeylD being programmed will be generated dynamically:

**Table 6. KEY_PROGRAM_STRUCT for Dynamic keys**

| Field | Value |
|---|---|
| KEYID | Key Identifier being programmed |
| KEYID_CTRL | COMMAND = KEYID_SET_KEY_DYNAMIC |
| | ENC_ALG: Software selected algorithm |
| | RSVD, MBZ |
| RSVD | RSVD, MBZ |
| KEY_FIELD_1 | Salt or Key split used to derive the data and tweak keys for the KeylD (64b) Rest of the bits are reserved, MBZ |
| KEY FIELD 2 | RSVD, MBZ |

After the key program leaf function is executed, a return value or status code may be specified in a hardware register to indicate whether the key program function was successful. **TABLE** 7 illustrates examples of status codes returned by the key program leaf function.

**TABLE 7: Status codes returned by key program leaf function (KEY_PROGRAM)**

| **Status Code** | **Code** | **Description** |
|---|---|---|
| PROG_SUCCESS | 0 | The domain is programmed successfully. |
| INVALID_PROG_CMD | 1 | The key programming command is invalid. |
| ENTROPY_ERROR | 2 | The entropy of a randomly generated key is insufficient. |
| INVALID_KEYID | 3 | The domain key ID is invalid. |
| INVALID_ENC_ALG | 4 | An invalid encryption algorithm is selected. |
| DEVICE_BUSY | 5 | A lock for the domain key table cannot be obtained. |

While the illustrated embodiment uses the PCONFIG processor instruction to perform domain configuration, other embodiments may use alternative and/or additional approaches for domain configuration. For example, in some embodiments, domain configuration may be performed using hardware registers. For example, a PCONFIG model-specific register (MSR) may be implemented for performing domain configuration, allowing software to invoke the PCONFIG operation by writing to the PCONFIG MSR (e.g., executing a WRMSR instruction with the index for the PCONFIG MSR passed in a register, such as the ECX register). Moreover, certain parameters for the PCONFIG operation (and its associated leaf functions and commands) may be passed in hardware registers. For example, the address of the key program structure (KEY_PROGRAM_STRUCT) can be passed in a hardware register, such as the EDX register, EAX register, or both of those registers (e.g., for 64-bit memory addresses). The PCONFIG operation can then be performed in a similar manner as described above.

Moreover, in some embodiments, a PCONFIG operation may utilize wrapped blobs for domain key programming. In this manner, domain keys can be programmed without revealing the keys to management software. In some embodiments, for example, additional PCONFIG leaf functions may be implemented to enable keys to be wrapped and then subsequently programmed to memory protection controller 320 after being unwrapped.

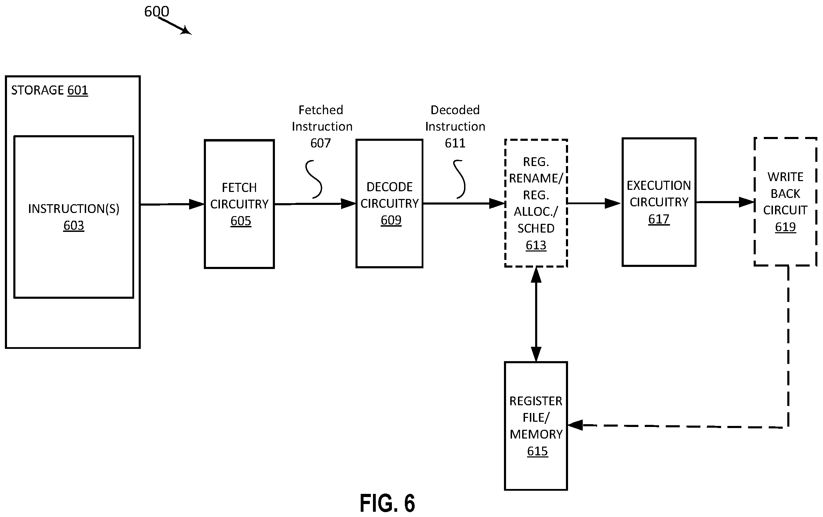

**Figure 6** is a block diagram illustrating processing components for executing instructions, according to some embodiments. As shown, storage 601 stores instruction(s) 603 to be executed. As described further below, in some embodiments, computing system 600 is a SIMD processor to concurrently process multiple elements of packed-data vectors, including matrices.

In operation, the instruction(s) is fetched from storage 601 by fetch circuitry 605. The fetched instruction 607 is decoded by decode circuitry 609. The instruction format, which is further illustrated and described with respect to **Figures 5****,** **7A-B****,** and **8A-D,** has fields (not shown here) to specify locations of first, second, and destination vectors. Decode circuit 609 decodes the instruction 607 into one or more operations. In some embodiments, this decoding includes generating a plurality of micro-operations to be performed by execution circuitry (such as execution circuitry 617). The decode circuit 609 also decodes instruction suffixes and prefixes (if used).

In some embodiments, register renaming, register allocation, and/or scheduling circuit 613 provides functionality for one or more of: 1) renaming logical operand values to physical operand values (e.g., a register alias table in some embodiments), 2) allocating status bits and flags to the decoded instruction, and 3) scheduling the decoded instruction 611 for execution on execution circuitry 617 out of an instruction pool (e.g., using a reservation station in some embodiments).

Registers (register file) and/or memory 615 store data as operands of the instruction 611 to be operated on by execution circuitry 617. Execution circuitry 617 is further described and illustrated below, at least with respect to **Figures 2-6B, 10A-B** and **11A-B.**

Exemplary register types include writemask registers, packed data registers, general purpose registers, and floating-point registers, as further described and illustrated below, at least with respect to **Figure 9****.**

In some embodiments, write back circuit 619 commits the result of the execution of the instruction 611. Execution circuitry 617 and system 600 are further illustrated and described with respect to **Figures 2-4****,** **10A-B****,** and **11A-B.**

### INSTRUCTION SETS

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, September 2014; and see Intel® Advanced Vector Extensions Programming Reference, October 2014).

### EXEMPLARY INSTRUCTION FORMATS

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

### GENERIC VECTOR FRIENDLY INSTRUCTION FORMAT

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

Figures **7A-7B** are block diagrams illustrating a generic vector friendly instruction format and instruction templates thereof according to some embodiments of the invention. **Figure 7A** is a block diagram illustrating a generic vector friendly instruction format and class A instruction templates thereof according to some embodiments of the invention; while **Figure 7B** is a block diagram illustrating the generic vector friendly instruction format and class B instruction templates thereof according to some embodiments of the invention. Specifically, a generic vector friendly instruction format 700 for which are defined class A and class B instruction templates, both of which include no memory access 705 instruction templates and memory access 720 instruction templates. The term generic in the context of the vector friendly instruction format refers to the instruction format not being tied to any specific instruction set.

While embodiments of the invention will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 7A** include: 1) within the no memory access 705 instruction templates there is shown a no memory access, full round control type operation 710 instruction template and a no memory access, data transform type operation 715 instruction template; and 2) within the memory access 720 instruction templates there is shown a memory access, temporal 725 instruction template and a memory access, non-temporal 730 instruction template. The class B instruction templates in **Figure 7B** include: 1) within the no memory access 705 instruction templates there is shown a no memory access, write mask control, partial round control type operation 712 instruction template and a no memory access, write mask control, vsize type operation 717 instruction template; and 2) within the memory access 720 instruction templates there is shown a memory access, write mask control 727 instruction template.

The generic vector friendly instruction format 700 includes the following fields listed below in the order illustrated in **Figures 7A-7B****.**

Format field 740 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 742 - its content distinguishes different base operations.

Register index field 744 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 746, which appears as no memory access field 746A and memory access field 746B - its content distinguishes occurrences of instructions in the generic vector instruction format that specify memory access from those that do not; that is, between no memory access 705 instruction templates and memory access 720 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 750 - its content distinguishes which one of a variety of different operations to be performed in addition to the base operation. This field is context specific. In some embodiments, this field is divided into a class field 768, an alpha field 752, and a beta field 754. The augmentation operation field 750 allows common groups of operations to be performed in a single instruction rather than 2, 3, or 4 instructions.

Scale field 760 - its content allows for the scaling of the index field's content for memory address generation (e.g., for address generation that uses 2^{scale} * index + base).

Displacement Field 762A- its content is used as part of memory address generation (e.g., for address generation that uses 2^{scale} * index + base + displacement).

Displacement Factor Field 762B (note that the juxtaposition of displacement field 762A directly over displacement factor field 762B indicates one or the other is used) - its content is used as part of address generation; it specifies a displacement factor that is to be scaled by the size of a memory access (N) - where N is the number of bytes in the memory access (e.g., for address generation that uses 2^{scale} * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 774 (described later herein) and the data manipulation field 754C. The displacement field 762A and the displacement factor field 762B are optional in the sense that they are not used for the no memory access 705 instruction templates and/or different embodiments may implement only one or none of the two.

Data element width field 764 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 770 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 770 allows for partial vector operations, including loads, stores, arithmetic, logical, etc. While embodiments of the invention are described in which the write mask field's 770 content selects one of a number of write mask registers that contains the write mask to be used (and thus the write mask field's 770 content indirectly identifies that masking to be performed), alternative embodiments instead or additional allow the write mask field's 770 content to directly specify the masking to be performed.

Immediate field 772 - its content allows for the specification of an immediate. This field is optional in the sense that it is not present in an implementation of the generic vector friendly format that does not support immediate and it is not present in instructions that do not use an immediate.

Class field 768 - its content distinguishes between different classes of instructions. With reference to **Figures 7A-B****,** the contents of this field select between class A and class B instructions. In **Figures 7A-B****,** rounded corner squares are used to indicate a specific value is present in a field (e.g., class A 768A and class B 768B for the class field 768 respectively in **Figures 7A-B****).**

### INSTRUCTION TEMPLATES OF CLASS A

In the case of the non-memory access 705 instruction templates of class A, the alpha field 752 is interpreted as an RS field 752A, whose content distinguishes which one of the different augmentation operation types are to be performed (e.g., round 752A.1 and data transform 752A.2 are respectively specified for the no memory access, round type operation 710 and the no memory access, data transform type operation 715 instruction templates), while the beta field 754 distinguishes which of the operations of the specified type is to be performed. In the no memory access 705 instruction templates, the scale field 760, the displacement field 762A, and the displacement factor field 762B are not present.

### NO-MEMORY ACCESS INSTRUCTION TEMPLATES - FULL ROUND CONTROL TYPE OPERATION

In the no memory access full round control type operation 710 instruction template, the beta field 754 is interpreted as a round control field 754A, whose content(s) provide static rounding. While in the described embodiments of the invention the round control field 754A includes a suppress all floating-point exceptions (SAE) field 756 and a round operation control field 758, alternative embodiments may encode both these concepts into the same field or only have one or the other of these concepts/fields (e.g., may have only the round operation control field 758).

SAE field 756 - its content distinguishes whether or not to disable the exception event reporting; when the SAE field's 756 content indicates suppression is enabled, a given instruction does not report any kind of floating-point exception flag and does not raise any floating-point exception handler.

Round operation control field 758 - its content distinguishes which one of a group of rounding operations to perform (e.g., Round-up, Round-down, Round-towards-zero and Round-to-nearest). Thus, the round operation control field 758 allows for the changing of the rounding mode on a per instruction basis. In some embodiments where a processor includes a control register for specifying rounding modes, the round operation control field's 750 content overrides that register value.

### NO MEMORY ACCESS INSTRUCTION TEMPLATES - DATA TRANSFORM TYPE OPERATION

In the no memory access data transform type operation 715 instruction template, the beta field 754 is interpreted as a data transform field 754B, whose content distinguishes which one of a number of data transforms is to be performed (e.g., no data transform, swizzle, broadcast).

In the case of a memory access 720 instruction template of class A, the alpha field 752 is interpreted as an eviction hint field 752B, whose content distinguishes which one of the eviction hints is to be used (in **Figure 7A****,** temporal 752B.1 and non-temporal 752B.2 are respectively specified for the memory access, temporal 725 instruction template and the memory access, non-temporal 730 instruction template), while the beta field 754 is interpreted as a data manipulation field 754C, whose content distinguishes which one of a number of data manipulation operations (also known as primitives) is to be performed (e.g., no manipulation; broadcast; up conversion of a source; and down conversion of a destination). The memory access 720 instruction templates include the scale field 760, and optionally the displacement field 762A or the displacement factor field 762B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

### MEMORY ACCESS INSTRUCTION TEMPLATES-TEMPORAL

Temporal data is data likely to be reused soon enough to benefit from caching. This is, however, a hint, and different processors may implement it in different ways, including ignoring the hint entirely.

### MEMORY ACCESS INSTRUCTION TEMPLATES - NON-TEMPORAL

Non-temporal data is data unlikely to be reused soon enough to benefit from caching in the 1st-level cache and should be given priority for eviction. This is, however, a hint, and different processors may implement it in different ways, including ignoring the hint entirely.

### INSTRUCTION TEMPLATES OF CLASS B

In the case of the instruction templates of class B, the alpha field 752 is interpreted as a write mask control (Z) field 752C, whose content distinguishes whether the write masking controlled by the write mask field 770 should be a merging or a zeroing.

In the case of the non-memory access 705 instruction templates of class B, part of the beta field 754 is interpreted as an RL field 757A, whose content distinguishes which one of the different augmentation operation types are to be performed (e.g., round 757A.1 and vector length (VSIZE) 757A.2 are respectively specified for the no memory access, write mask control, partial round control type operation 712 instruction template and the no memory access, write mask control, VSIZE type operation 717 instruction template), while the rest of the beta field 754 distinguishes which of the operations of the specified type is to be performed. In the no memory access 705 instruction templates, the scale field 760, the displacement field 762A, and the displacement factor field 762B are not present.

In the no memory access, write mask control, partial round control type operation 710 instruction template, the rest of the beta field 754 is interpreted as a round operation field 759A and exception event reporting is disabled (a given instruction does not report any kind of floating-point exception flag and does not raise any floating-point exception handler).

Round operation control field 759A - just as round operation control field 758, its content distinguishes which one of a group of rounding operations to perform (e.g., Round-up, Round-down, Round-towards-zero and Round-to-nearest). Thus, the round operation control field 759A allows for the changing of the rounding mode on a per instruction basis. In some embodiments where a processor includes a control register for specifying rounding modes, the round operation control field's 750 content overrides that register value.

In the no memory access, write mask control, VSIZE type operation 717 instruction template, the rest of the beta field 754 is interpreted as a vector length field 759B, whose content distinguishes which one of a number of data vector lengths is to be performed on (e.g., 128, 256, or 512 byte).

In the case of a memory access 720 instruction template of class B, part of the beta field 754 is interpreted as a broadcast field 757B, whose content distinguishes whether or not the broadcast type data manipulation operation is to be performed, while the rest of the beta field 754 is interpreted the vector length field 759B. The memory access 720 instruction templates include the scale field 760, and optionally the displacement field 762A or the displacement factor field 762B.

With regard to the generic vector friendly instruction format 700, a full opcode field 774 is shown including the format field 740, the base operation field 742, and the data element width field 764. While one embodiment is shown where the full opcode field 774 includes all of these fields, the full opcode field 774 includes less than all of these fields in embodiments that do not support all of them. The full opcode field 774 provides the operation code (opcode).

The augmentation operation field 750, the data element width field 764, and the write mask field 770 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the invention, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the invention). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the invention. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

### EXEMPLARY SPECIFIC VECTOR FRIENDLY INSTRUCTION FORMAT

**Figure 8A** is a block diagram illustrating an exemplary specific vector friendly instruction format according to some embodiments of the invention. **Figure 8A** shows a specific vector friendly instruction format 800 that is specific in the sense that it specifies the location, size, interpretation, and order of the fields, as well as values for some of those fields. The specific vector friendly instruction format 800 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 7A** **or** **7B** into which the fields from **Figure 8A** map are illustrated.

It should be understood that, although embodiments of the invention are described with reference to the specific vector friendly instruction format 800 in the context of the generic vector friendly instruction format 700 for illustrative purposes, the invention is not limited to the specific vector friendly instruction format 800 except where claimed. For example, the generic vector friendly instruction format 700 contemplates a variety of possible sizes for the various fields, while the specific vector friendly instruction format 800 is shown as having fields of specific sizes. By way of specific example, while the data element width field 764 is illustrated as a one bit field in the specific vector friendly instruction format 800, the invention is not so limited (that is, the generic vector friendly instruction format 700 contemplates other sizes of the data element width field 764).

The specific vector friendly instruction format 800 includes the following fields listed below in the order illustrated in **Figure 8A****.**

EVEX Prefix (Bytes 0-3) 802 - is encoded in a four-byte form.

Format Field 740 (EVEX Byte 0, bits [7:0]) - the first byte (EVEX Byte 0) is the format field 740 and it contains 0x62 (the unique value used for distinguishing the vector friendly instruction format in some embodiments).

The second-fourth bytes (EVEX Bytes 1-3) include a number of bit fields providing specific capability.

REX field 805 (EVEX Byte 1, bits [7-5]) - consists of a EVEX.R bit field (EVEX Byte 1, bit [7] - R), EVEX.X bit field (EVEX byte 1, bit [6] - X), and EVEX.B bit field (EVEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and 2), so that Rrrr, Xxxx, and 2b may be formed by adding EVEX.R, EVEX.X, and EVEX.B.

REX' 810A - this is the first part of the REX' field 810 and is the EVEX.R' bit field (EVEX Byte 1, bit [4] - R') that is used to encode either the upper 16 or lower 16 of the extended 32 register set. In some embodiments, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the invention do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 815 (EVEX byte 1, bits [3:0] - mmmm) - its content encodes an implied leading opcode byte (0F, 0F 38, or 0F 3).

Data element width field 764 (EVEX byte 2, bit [7] - W) - is represented by the notation EVEX.W. EVEX.W is used to define the granularity (size) of the datatype (either 32-bit data elements or 64-bit data elements).

EVEX.vvvv 820 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 820 encodes the 4 low-order bits of the first source register specifier stored in inverted (1s complement) form. Depending on the instruction, an extra different EVEX bit field is used to extend the specifier size to 32 registers.

EVEX.U 768 Class field (EVEX byte 2, bit [2]-U) - If EVEX.U = 0, it indicates class A or EVEX.U0; if EVEX.U = 1, it indicates class B or EVEX.U1.

Prefix encoding field 825 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decoder's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 752 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 754 (EVEX byte 3, bits [6:4]-SSS, also known as EVEX.S₂₋₀, EVEX.r₂₋₀, EVEX.rr1, EVEX.LL0, EVEX.LLB; also illustrated with βββ) - as previously described, this field is context specific.

REX' 810B - this is the remainder of the REX' field 810 and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 770 (EVEX byte 3, bits [2:0]-kkk) - its content specifies the index of a register in the write mask registers as previously described. In some embodiments, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 830 (Byte 4) is also known as the opcode byte. Part of the opcode is specified in this field.

MOD R/M Field 840 (Byte 5) includes MOD field 842, Reg field 844, and R/M field 846. As previously described, the MOD field's 842 content distinguishes between memory access and non-memory access operations. The role of Reg field 844 can be summarized to two situations: encoding either the destination register operand or a source register operand or be treated as an opcode extension and not used to encode any instruction operand. The role of R/M field 846 may include the following: encoding the instruction operand that references a memory address or encoding either the destination register operand or a source register operand.

Scale, Index, Base Byte, SIB 850, (Byte 6) - the scale field, SS 852, is used for memory address generation. SIB.xxx 854 and SIB.2 856 - the contents of these fields have been previously referred to with regard to the register indexes Xxxx and 2b.

Displacement field 762A (Bytes 7-10) - when MOD field 842 contains 10, bytes 7-10 are the displacement field 762A, and it works the same as the legacy 32-bit displacement (disp32) and works at byte granularity.

Displacement factor field 762B (Byte 7) - when MOD field 842 contains 01, byte 7 is the displacement factor field 762B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and +64; since a greater range is often needed, disp32 is used; however, disp32 requires 4 bytes. In contrast to disp8 and disp32, the displacement factor field 762B is a reinterpretation of disp8; when using displacement factor field 762B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 762B substitutes the legacy x86 instruction set 8-bit displacement. Thus, the displacement factor field 762B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 772 operates as previously described.

### FULL OPCODE FIELD

**Figure 8B** is a block diagram illustrating the fields of the specific vector friendly instruction format 800 that make up the full opcode field 774 according to some embodiments. Specifically, the full opcode field 774 includes the format field 740, the base operation field 742, and the data element width (W) field 764. The base operation field 742 includes the prefix encoding field 825, the opcode map field 815, and the real opcode field 830.

### REGISTER INDEX FIELD

**Figure 8C** is a block diagram illustrating the fields of the specific vector friendly instruction format 800 that make up the register index field 744 according to some embodiments. Specifically, the register index field 744 includes the REX field 805, the REX' field 810, the MODR/M.reg field 844, the MODR/M.r/m field 846, the VVVV field 820, xxx field 854, and the 2 field 856.

### AUGMENTATION OPERATION FIELD

**Figure 8D** is a block diagram illustrating the fields of the specific vector friendly instruction format 800 that make up the augmentation operation field 750 according to some embodiments. When the class (U) field 768 contains 0, it signifies EVEX.U0 (class A 768A); when it contains 1, it signifies EVEX.U1 (class B 768B). When U=0 and the MOD field 842 contains 11 (signifying a no memory access operation), the alpha field 752 (EVEX byte 3, bit [7] - EH) is interpreted as the rs field 752A. When the rs field 752A contains a 1 (round 752A.1), the beta field 754 (EVEX byte 3, bits [6:4]- SSS) is interpreted as the round control field 754A. The round control field 754A includes a one bit SAE field 756 and a two bit round operation field 758. When the rs field 752A contains a 0 (data transform 752A.2), the beta field 754 (EVEX byte 3, bits [6:4]- SSS) is interpreted as a three bit data transform field 754B. When U=0 and the MOD field 842 contains 00, 01, or 10 (signifying a memory access operation), the alpha field 752 (EVEX byte 3, bit [7] - EH) is interpreted as the eviction hint (EH) field 752B and the beta field 754 (EVEX byte 3, bits [6:4]- SSS) is interpreted as a three bit data manipulation field 754C.

When U=1, the alpha field 752 (EVEX byte 3, bit [7] - EH) is interpreted as the write mask control (Z) field 752C. When U=1 and the MOD field 842 contains 11 (signifying a no memory access operation), part of the beta field 754 (EVEX byte 3, bit [4]- So) is interpreted as the RL field 757A; when it contains a 1 (round 757A.1) the rest of the beta field 754 (EVEX byte 3, bit [6-5]- S₂₋₁) is interpreted as the round operation field 759A, while when the RL field 757A contains a 0 (VSIZE 757.A2) the rest of the beta field 754 (EVEX byte 3, bit [6-5]- S₂₋₁) is interpreted as the vector length field 759B (EVEX byte 3, bit [6-5]- L₁₋₀). When U=1 and the MOD field 842 contains 00, 01, or 10 (signifying a memory access operation), the beta field 754 (EVEX byte 3, bits [6:4]- SSS) is interpreted as the vector length field 759B (EVEX byte 3, bit [6-5]- L₁₋₀) and the broadcast field 757B (EVEX byte 3, bit [4]- B).

### EXEMPLARY REGISTER ARCHITECTURE

**Figure 9** is a block diagram of a register architecture 900 according to some embodiments. In the embodiment illustrated, there are 32 vector registers 910 that are 512 bits wide; these registers are referenced as zmm0 through zmm31. The lower order 256 bits of the lower 16 zmm registers are overlaid on registers ymm0-15. The lower order 128 bits of the lower 16 zmm registers (the lower order 128 bits of the ymm registers) are overlaid on registers xmm0-15. The specific vector friendly instruction format 800 operates on these overlaid register file as illustrated in the below tables.

| Adjustable Vector Length | Class | Operations | Registers |
|---|---|---|---|
| Instruction Templates that do not include the vector length field 759B | A **(****Figure 7A****;** U=0) | 710, 715, 725, 730 | zmm registers (the vector length is 64 byte) |
| | B **(****Figure 7B****;** U=1) | 712 | zmm registers (the vector length is 64 byte) |
| Instruction templates that do include the vector length field 759B | B **(****Figure 7B****;** U=1) | 717, 727 | zmm, ymm, or xmm registers (the vector length is 64 byte, 32 byte, or 16 byte) depending on the vector length field 759B |

In other words, the vector length field 759B selects between a maximum length and one or more other shorter lengths, where each such shorter length is half the length of the preceding length; and instructions templates without the vector length field 759B operate on the maximum vector length. Further, in one embodiment, the class B instruction templates of the specific vector friendly instruction format 800 operate on packed or scalar single/double-precision floating-point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 915 - in the embodiment illustrated, there are 8 write mask registers (k0 through k7), each 64 bits in size. In an alternate embodiment, the write mask registers 915 are 16 bits in size. As previously described, in some embodiments, the vector mask register k0 cannot be used as a write mask; when the encoding that would normally indicate k0 is used for a write mask, it selects a hardwired write mask of 0x6f, effectively disabling write masking for that instruction.

General-purpose registers 925 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating-point stack register file (x87 stack) 945, on which is aliased the MMX packed integer flat register file 950 - in the embodiment illustrated, the x87 stack is an eight-element stack used to perform scalar floating-point operations on 32/64/80-bit floating-point data using the x87 instruction set extension; while the MMX registers are used to perform operations on 64-bit packed integer data, as well as to hold operands for some operations performed between the MMX and XMM registers.

Alternative embodiments may use wider or narrower registers. Additionally, alternative embodiments may use more, less, or different register files and registers.

### EXEMPLARY CORE ARCHITECTURES, PROCESSORS, AND COMPUTER ARCHITECTURES

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### EXEMPLARY CORE ARCHITECTURES

### IN-ORDER AND OUT-OF-ORDER CORE BLOCK DIAGRAM

**Figure 10A** is a block diagram illustrating both an exemplary in-order pipeline and an exemplary register renaming, out-of-order issue/execution pipeline according to some embodiments of the invention. **Figure 10B** is a block diagram illustrating both an exemplary embodiment of an in-order architecture core and an exemplary register renaming, out-of-order issue/execution architecture core to be included in a processor according to some embodiments of the invention. The solid lined boxes in **Figures 10A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 10A****,** a processor pipeline 1000 includes a fetch stage 1002, a length decode stage 1004, a decode stage 1006, an allocation stage 1008, a renaming stage 1010, a scheduling (also known as a dispatch or issue) stage 1012, a register read/memory read stage 1014, an execute stage 1016, a write back/memory write stage 1018, an exception handling stage 1022, and a commit stage 1024.

**Figure 10B** shows processor core 1090 including a front end unit 1030 coupled to an execution engine unit 1050, and both are coupled to a memory unit 1070. The core 1090 may be a reduced instruction set computing (RISC) core, a complex instruction set computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end unit 1030 includes a branch prediction unit 1032 coupled to an instruction cache unit 1034, which is coupled to an instruction translation lookaside buffer (TLB) 1036, which is coupled to an instruction fetch unit 1038, which is coupled to a decode unit 1040. The decode unit 1040 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1040 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1090 includes a microcode ROM or other medium that stores microcode for certain macroinstructions (e.g., in decode unit 1040 or otherwise within the front end unit 1030). The decode unit 1040 is coupled to a rename/allocator unit 1052 in the execution engine unit 1050.

The execution engine unit 1050 includes the rename/allocator unit 1052 coupled to a retirement unit 1054 and a set of one or more scheduler unit(s) 1056. The scheduler unit(s) 1056 represents any number of different schedulers, including reservations stations, central instruction window, etc. The scheduler unit(s) 1056 is coupled to the physical register file(s) unit(s) 1058. Each of the physical register file(s) units 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit 1058 comprises a vector registers unit, a write mask registers unit, and a scalar registers unit. These register units may provide architectural vector registers, vector mask registers, and general purpose registers. The physical register file(s) unit(s) 1058 is overlapped by the retirement unit 1054 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1054 and the physical register file(s) unit(s) 1058 are coupled to the execution cluster(s) 1060. The execution cluster(s) 1060 includes a set of one or more execution units 1062 and a set of one or more memory access units 1064. The execution units 1062 may perform various operations (e.g., shifts, addition, subtraction, multiplication) and on various types of data (e.g., scalar floating-point, packed integer, packed floating-point, vector integer, vector floating-point). While some embodiments may include a number of execution units dedicated to specific functions or sets of functions, other embodiments may include only one execution unit or multiple execution units that all perform all functions. The scheduler unit(s) 1056, physical register file(s) unit(s) 1058, and execution cluster(s) 1060 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1064). It should also be understood that where separate pipelines are used, one or more of these pipelines may be out-of-order issue/execution and the rest in-order.

The set of memory access units 1064 is coupled to the memory unit 1070, which includes a data TLB unit 1072 coupled to a data cache unit 1074 coupled to a level 2 (L2) cache unit 1076. In one exemplary embodiment, the memory access units 1064 may include a load unit, a store address unit, and a store data unit, each of which is coupled to the data TLB unit 1072 in the memory unit 1070. The instruction cache unit 1034 is further coupled to a level 2 (L2) cache unit 1076 in the memory unit 1070. The L2 cache unit 1076 is coupled to one or more other levels of cache and eventually to a main memory.

By way of example, the exemplary register renaming, out-of-order issue/execution core architecture may implement the pipeline 1000 as follows: 1) the instruction fetch 1038 performs the fetch and length decoding stages 1002 and 1004; 2) the decode unit 1040 performs the decode stage 1006; 3) the rename/allocator unit 1052 performs the allocation stage 1008 and renaming stage 1010; 4) the scheduler unit(s) 1056 performs the schedule stage 1012; 5) the physical register file(s) unit(s) 1058 and the memory unit 1070 perform the register read/memory read stage 1014; the execution cluster 1060 perform the execute stage 1016; 6) the memory unit 1070 and the physical register file(s) unit(s) 1058 perform the write back/memory write stage 1018; 7) various units may be involved in the exception handling stage 1022; and 8) the retirement unit 1054 and the physical register file(s) unit(s) 1058 perform the commit stage 1024.

The core 1090 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1090 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1034/1074 and a shared L2 cache unit 1076, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### SPECIFIC EXEMPLARY IN-ORDER CORE ARCHITECTURE

**Figures 11A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 11A** is a block diagram of a single processor core, along with its connection to the on-die interconnect network 1102 and with its local subset of the Level 2 (L2) cache 1104, according to some embodiments of the invention. In one embodiment, an instruction decoder 1100 supports the x86 instruction set with a packed data instruction set extension. An L1 cache 1106 allows low-latency accesses to cache memory into the scalar and vector units. While in one embodiment (to simplify the design), a scalar unit 1108 and a vector unit 1110 use separate register sets (respectively, scalar registers 1112 and vector registers 1114) and data transferred between them is written to memory and then read back in from a level 1 (L1) cache 1106, alternative embodiments of the invention may use a different approach (e.g., use a single register set or include a communication path that allow data to be transferred between the two register files without being written and read back).

The local subset of the L2 cache 1104 is part of a global L2 cache that is divided into separate local subsets, one per processor core. Each processor core has a direct access path to its own local subset of the L2 cache 1104. Data read by a processor core is stored in its L2 cache subset 1104 and can be accessed quickly, in parallel with other processor cores accessing their own local L2 cache subsets. Data written by a processor core is stored in its own L2 cache subset 1104 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 11B** is an expanded view of part of the processor core in **Figure 11A** according to some embodiments of the invention. **Figure 11B** includes an L1 data cache 1106A part of the L1 cache 1106, as well as more detail regarding the vector unit 1110 and the vector registers 1114. Specifically, the vector unit 1110 is a 16-wide vector processing unit (VPU) (see the 16-wide ALU 1128), which executes one or more of integer, single-precision float, and double-precision float instructions. The VPU supports swizzling the register inputs with swizzle unit 1120, numeric conversion with numeric convert units 1122A and 1122B, and replication with replication unit 1124 on the memory input. Write mask registers 1126 allow predicating resulting vector writes.

**Figure 12** is a block diagram of a processor 1200 that may have more than one core, may have an integrated memory controller, and may have integrated graphics according to some embodiments of the invention. The solid lined boxes in **Figure 12** illustrate a processor 1200 with a single core 1202A, a system agent 1210, a set of one or more bus controller units 1216, while the optional addition of the dashed lined boxes illustrates an alternative processor 1200 with multiple cores 1202A through 1202N, a set of one or more integrated memory controller unit(s) 1214 in the system agent unit 1210, and special purpose logic 1208.

Thus, different implementations of the processor 1200 may include: 1) a CPU with the special purpose logic 1208 being integrated graphics and/or scientific (throughput) logic (which may include one or more cores), and the cores 1202A-N being one or more general purpose cores (e.g., general purpose in-order cores, general purpose out-of-order cores, a combination of the two); 2) a coprocessor with the cores 1202A-N being a large number of special purpose cores intended primarily for graphics and/or scientific (throughput); and 3) a coprocessor with the cores 1202A-N being a large number of general purpose in-order cores. Thus, the processor 1200 may be a general-purpose processor, coprocessor, or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, BiCMOS, CMOS, or NMOS.

The memory hierarchy includes one or more levels of cache within the cores, a set of one or more shared cache units 1206, and external memory (not shown) coupled to the set of integrated memory controller units 1214. The set of shared cache units 1206 may include one or more mid-level caches, such as level 2 (L2), level 3 (L3), level 4 (L4), or other levels of cache, a last level cache (LLC), and/or combinations thereof. While in one embodiment a ring based interconnect unit 1212 interconnects the integrated graphics logic 1208 (integrated graphics logic 1208 is an example of and is also referred to herein as special purpose logic), the set of shared cache units 1206, and the system agent unit 1210/integrated memory controller unit(s) 1214, alternative embodiments may use any number of well-known techniques for interconnecting such units. In one embodiment, coherency is maintained between one or more cache units 1206 and cores 1202-A-N.

In some embodiments, one or more of the cores 1202A-N are capable of multithreading. The system agent 1210 includes those components coordinating and operating cores 1202A-N. The system agent unit 1210 may include for example a power control unit (PCU) and a display unit. The PCU may be or include logic and components needed for regulating the power state of the cores 1202A-N and the integrated graphics logic 1208. The display unit is for driving one or more externally connected displays.

The cores 1202A-N may be homogenous or heterogeneous in terms of architecture instruction set; that is, two or more of the cores 1202A-N may be capable of execution the same instruction set, while others may be capable of executing only a subset of that instruction set or a different instruction set.

### EXEMPLARY COMPUTER ARCHITECTURES

**Figures 13-16** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 13****,** shown is a block diagram of a system 1300 in accordance with one embodiment of the present invention. The system 1300 may include one or more processors 1310, 1315, which are coupled to a controller hub 1320. In one embodiment the controller hub 1320 includes a graphics memory controller hub (GMCH) 1390 and an Input/Output Hub (IOH) 1350 (which may be on separate chips); the GMCH 1390 includes memory and graphics controllers to which are coupled memory 1340 and a coprocessor 1345; the IOH 1350 couples input/output (I/O) devices 1360 to the GMCH 1390. Alternatively, one or both of the memory and graphics controllers are integrated within the processor (as described herein), the memory 1340 and the coprocessor 1345 are coupled directly to the processor 1310, and the controller hub 1320 in a single chip with the IOH 1350.

The optional nature of additional processors 1315 is denoted in **Figure 13** with broken lines. Each processor 1310, 1315 may include one or more of the processing cores described herein and may be some version of the processor 1200.

The memory 1340 may be, for example, dynamic random access memory (DRAM), phase change memory (PCM), or a combination of the two. For at least one embodiment, the controller hub 1320 communicates with the processor(s) 1310, 1315 via a multi-drop bus, such as a frontside bus (FSB), point-to-point interface such as QuickPath Interconnect (QPI), or similar connection 1395.

In one embodiment, the coprocessor 1345 is a special-purpose processor, such as, for example, a high-throughput MIC processor, a network or communication processor, compression engine, graphics processor, GPGPU, embedded processor, or the like. In one embodiment, controller hub 1320 may include an integrated graphics accelerator.

There can be a variety of differences between the physical resources 1310, 1315 in terms of a spectrum of metrics of merit including architectural, microarchitectural, thermal, power consumption characteristics, and the like.

In one embodiment, the processor 1310 executes instructions that control data processing operations of a general type. Embedded within the instructions may be coprocessor instructions. The processor 1310 recognizes these coprocessor instructions as being of a type that should be executed by the attached coprocessor 1345. Accordingly, the processor 1310 issues these coprocessor instructions (or control signals representing coprocessor instructions) on a coprocessor bus or other interconnect, to coprocessor 1345. Coprocessor(s) 1345 accept and execute the received coprocessor instructions.

Referring now to **Figure 14****,** shown is a block diagram of a first more specific exemplary system 1400 in accordance with an embodiment of the present invention. As shown in **Figure 14****,** multiprocessor system 1400 is a point-to-point interconnect system, and includes a first processor 1470 and a second processor 1480 coupled via a point-to-point interconnect 1450. Each of processors 1470 and 1480 may be some version of the processor 1200. In some embodiments, processors 1470 and 1480 are respectively processors 1310 and 1315, while coprocessor 1438 is coprocessor 1345. In another embodiment, processors 1470 and 1480 are respectively processor 1310 coprocessor 1345.

Processors 1470 and 1480 are shown including integrated memory controller (IMC) units 1472 and 1482, respectively. Processor 1470 also includes as part of its bus controller units point-to-point (P-P) interfaces 1476 and 1478; similarly, second processor 1480 includes P-P interfaces 1486 and 1488. Processors 1470, 1480 may exchange information via a point-to-point (P-P) interface 1450 using P-P interface circuits 1478, 1488. As shown in **Figure 14****,** IMCs 1472, and 1482 couple the processors to respective memories, namely a memory 1432 and a memory 1434, which may be portions of main memory locally attached to the respective processors.

Processors 1470, 1480 may each exchange information with a chipset 1490 via individual P-P interfaces 1452, 1454 using point to point interface circuits 1476, 1494, 1486, 1498. Chipset 1490 may optionally exchange information with the coprocessor 1438 via a high-performance interface 1492. In one embodiment, the coprocessor 1438 is a special-purpose processor, such as, for example, a high-throughput MIC processor, a network or communication processor, compression engine, graphics processor, GPGPU, embedded processor, or the like.

A shared cache (not shown) may be included in either processor or outside of both processors yet connected with the processors via P-P interconnect, such that either or both processors' local cache information may be stored in the shared cache if a processor is placed into a low power mode.

Chipset 1490 may be coupled to a first bus 1416 via an interface 1496. In one embodiment, first bus 1416 may be a Peripheral Component Interconnect (PCI) bus, or a bus such as a PCI Express bus or another third generation I/O interconnect bus, although the scope of the present invention is not so limited.

As shown in **Figure 14****,** various I/O devices 1414 may be coupled to first bus 1416, along with a bus bridge 1418 which couples first bus 1416 to a second bus 1420. In one embodiment, one or more additional processor(s) 1415, such as coprocessors, high-throughput MIC processors, GPGPU's, accelerators (such as, e.g., graphics accelerators or digital signal processing (DSP) units), field programmable gate arrays, or any other processor, are coupled to first bus 1416. In one embodiment, second bus 1420 may be a low pin count (LPC) bus. Various devices may be coupled to a second bus 1420 including, for example, a keyboard and/or mouse 1422, communication devices 1427 and a storage unit 1428 such as a disk drive or other mass storage device which may include instructions/code and data 1430, in one embodiment. Further, an audio I/O 1424 may be coupled to the second bus 1420. Note that other architectures are possible. For example, instead of the point-to-point architecture of **Figure 14****,** a system may implement a multi-drop bus or other such architecture.

Referring now to **Figure 15****,** shown is a block diagram of a second more specific exemplary system 1500 in accordance with an embodiment of the present invention. Like elements in **Figures 14** **and** **15** bear like reference numerals, and certain aspects of **Figure 14** have been omitted from **Figure 15** in order to avoid obscuring other aspects of **Figure 15****.**

**Figure 15** illustrates that the processors 1470, 1480 may include integrated memory and I/O control logic ("CL") 1572 and 1582, respectively. Thus, the CL 1572, 1582 include integrated memory controller units and include I/O control logic. **Figure 15** illustrates that not only are the memories 1432, 1434 coupled to the CL 1572, 1582, but also that I/O devices 1514 are also coupled to the control logic 1572, 1582. Legacy I/O devices 1515 are coupled to the chipset 1490.

Referring now to **Figure 16****,** shown is a block diagram of a SoC 1600 in accordance with an embodiment of the present invention. Similar elements in **Figure 12** bear like reference numerals. Also, dashed lined boxes are optional features on more advanced SoCs. In **Figure 16****,** an interconnect unit(s) 1602 is coupled to: an application processor 1610 which includes a set of one or more cores 1202A-N, which include cache units 1204A through 1204N, and shared cache unit(s) 1206; a system agent unit 1210; a bus controller unit(s) 1216; an integrated memory controller unit(s) 1214; a set of one or more coprocessors 1620 which may include integrated graphics logic, an image processor, an audio processor, and a video processor; an static random access memory (SRAM) unit 1630; a direct memory access (DMA) unit 1632; and a display unit 1640 for coupling to one or more external displays. In one embodiment, the coprocessor(s) 1620 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1430 illustrated in **Figure 14****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### EMULATION (INCLUDING BINARY TRANSLATION, CODE MORPHING, ETC.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

**Figure 17** is a block diagram contrasting the use of a software instruction converter to convert binary instructions in a source instruction set to binary instructions in a target instruction set according to some embodiments of the invention. In the illustrated embodiment, the instruction converter is a software instruction converter, although alternatively the instruction converter may be implemented in software, firmware, hardware, or various combinations thereof. **Figure 17** shows a program in a high level language 1702 may be compiled using an x86 compiler 1704 to generate x86 binary code 1706 that may be natively executed by a processor with at least one x86 instruction set core 1716. The processor with at least one x86 instruction set core 1716 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1704 represents a compiler that is operable to generate x86 binary code 1706 (e.g., object code) that can, with or without additional linkage processing, be executed on the processor with at least one x86 instruction set core 1716. Similarly, **Figure 17** shows the program in the high level language 1702 may be compiled using an alternative instruction set compiler 1708 to generate alternative instruction set binary code 1710 that may be natively executed by a processor without at least one x86 instruction set core 1714 (e.g., a processor with cores that execute the MIPS instruction set of MIPS Technologies of Sunnyvale, CA and/or that execute the ARM instruction set of ARM Holdings of Sunnyvale, CA). The instruction converter 1712 is used to convert the x86 binary code 1706 into code that may be natively executed by the processor without an x86 instruction set core 1714. This converted code is not likely to be the same as the alternative instruction set binary code 1710 because an instruction converter capable of this is difficult to make; however, the converted code will accomplish the general operation and be made up of instructions from the alternative instruction set. Thus, the instruction converter 1712 represents software, firmware, hardware, or a combination thereof that, through emulation, simulation, or any other process, allows a processor or other electronic device that does not have an x86 instruction set processor or core to execute the x86 binary code 1706.

### FURTHER EXAMPLES

**Example 1** provides an exemplary processor comprising: fetch circuitry to fetch an instruction; decode circuitry to decode the fetched instruction, the fetched instruction to specify an opcode, an address, and a key identifier, the opcode indicating the processor is to use the address to determine whether to use an explicit key, in which case the processor is to use the key identifier to select a cryptographic key among the plurality of full encryption keys, and, otherwise, the processor is to dynamically derive the cryptographic key by using the key identifier to select a key split among the plurality of key splits, and provide the key split and a root key to a key derivation function (KDF), the processor further to use the cryptographic key with the encryption circuitry to perform a cryptographic operation on an encrypted memory location; and execution circuitry to perform the instruction as per the opcode, wherein each of the key splits requires less storage than each of the full encryption keys.
**Example 2** includes the substance of the exemplary processor of **Example 1,** further comprising a plurality of cores, each comprising an instance of a fetch, decode, and execution circuitry, wherein a least a proper subset of the plurality of cores are to execute plurality of virtual machines, each virtual machine having a unique cryptographic key.
**Example 3** includes the substance of the exemplary processor of **Example 1,** wherein the instruction is associated with a virtual machine being executed by one of a plurality of cores of the processor.
**Example 4** includes the substance of the exemplary processor of **Example 1,** wherein the instruction further has a field to specify write data, and wherein the opcode calls for the processor to encrypt the write data and store encrypted write data to the location identified by the address.
**Example 5** includes the substance of the exemplary processor of **Example 1,** wherein the opcode calls for the fetch of read data from the location identified by the address, and to use the cryptographic key to decrypt the read data.
**Example 6** includes the substance of the exemplary processor of **Example 1,** wherein the KDF uses multiple iterations of a pseudorandom function in either a counter mode or a feedback mode.
**Example 7** includes the substance of the exemplary processor of **Example 1,** wherein the root key comprises either 128 bits or 256 bits.
**Example 8** provides an exemplary method to be performed by a processor comprising a memory controller to use cryptographic circuitry to encrypt and decrypt data, and storage to store a plurality of key splits and a plurality of full encryption keys, the method comprising: fetching, using fetch circuitry, an instruction; decoding, using decode circuitry, the fetched instruction specifying an opcode, an address, and a key identifier, the opcode indicating the processor is to use the address to determine whether to use an explicit key, in which case the processor is to use the key identifier to select a cryptographic key among the plurality of full encryption keys, and, otherwise, the processor is to dynamically derive the cryptographic key by using the key identifier to select a key split among the plurality of key splits, and provide the key split and a root key to a key derivation function (KDF) implemented by the memory controller, which is further to use the cryptographic key with the encryption circuitry to perform a cryptographic operation on an encrypted memory location; and executing the instruction, using execution circuitry, as per the opcode, wherein each of the key splits requires less storage than each of the full encryption keys.
**Example 9** includes the substance of the exemplary method of **Example 8,** further comprising implementing a plurality of virtual machines using a plurality of cores within the processor, each core comprising an instance of fetch, decode, and execution circuitry, wherein at least one of the plurality of cores implements a plurality of virtual machines, each having a unique cryptographic key.
**Example 10** includes the substance of the exemplary method of **Example 8,** wherein the instruction is associated with a virtual machine being executed by one of a plurality of cores of the processor.
**Example 11** includes the substance of the exemplary method of **Example 8,** wherein the instruction further has a field to specify write data, and wherein the opcode calls for the processor to encrypt the write data and store encrypted write data to the location identified by the address.
**Example 12** includes the substance of the exemplary method of **Example 8,** wherein the opcode calls for the fetch of read data from the location identified by the address, and to use the cryptographic key to decrypt the read data.
**Example 13** includes the substance of the exemplary method of **Example 8,** wherein the KDF uses multiple iterations of a pseudorandom function in either a counter mode or a feedback mode.
**Example 14** includes the substance of the exemplary method of **Example 8,** wherein the root key comprises either 128 bits or 256 bits.
**Example 15** provides an exemplary non-transitory computer-readable medium containing instructions to which a processor comprising a memory controller to use cryptographic circuitry to encrypt and decrypt data, a memory controller to use cryptographic circuitry to encrypt and decrypt data, and storage to store a plurality of key splits and a plurality of full encryption keys is to respond by: fetching, using fetch circuitry, an instruction; decoding, using decode circuitry, the fetched instruction specifying an opcode, an address, and a key identifier, the opcode indicating the processor is to use the address to determine whether to use an explicit key, in which case the processor is to use the key identifier to select a cryptographic key among the plurality of full encryption keys, and, otherwise, the processor is to dynamically derive the cryptographic key by using the key identifier to select a key split among the plurality of key splits, and provide the key split and a root key to a key derivation function (KDF) implemented by the memory controller, which is further to use the cryptographic key with the encryption circuitry to perform a cryptographic operation on an encrypted memory location; and executing the instruction, using execution circuitry, as per the opcode, wherein each of the key splits requires less storage than each of the full encryption keys.
**Example 16** includes the substance of the exemplary non-transitory computer-readable medium of **Example 15,** wherein the instructions further call for implementing a plurality of virtual machines using a plurality of cores within the processor, each core comprising an instance of fetch, decode, and execution circuitry, wherein at least one of the plurality of cores implements a plurality of virtual machines, each having a unique cryptographic key.
**Example 17** includes the substance of the exemplary non-transitory computer-readable medium of **Example 15,** wherein the instruction is associated with a virtual machine being executed by one of a plurality of cores of the processor.
**Example 18** includes the substance of the exemplary non-transitory computer-readable medium of **Example 15,** wherein the instruction further has a field to specify write data, and wherein the opcode calls for the processor to encrypt the write data and store encrypted write data to the location identified by the address.
**Example 19** includes the substance of the exemplary non-transitory computer-readable medium of **Example 15,** wherein the opcode calls for the fetch of read data from the location identified by the address, and to use the cryptographic key to decrypt the read data.
**Example 20** includes the substance of the exemplary non-transitory computer-readable medium of **Example 15,** wherein the KDF uses multiple iterations of a pseudorandom function in either a counter mode or a feedback mode.

## Claims

1. A processor comprising:
fetch circuitry to fetch an instruction;
decode circuitry to decode the fetched instruction, the fetched instruction to specify an opcode, an address, and a key identifier, the opcode indicating the processor is to use the address to determine whether to use an explicit key, in which case the processor is to use the key identifier to select a cryptographic key among the plurality of full encryption keys, and, otherwise, the processor is to dynamically derive the cryptographic key by using the key identifier to select a key split among the plurality of key splits, and provide the key split and a root key to a key derivation function (KDF), the processor further to use the cryptographic key with the encryption circuitry to perform a cryptographic operation on an encrypted memory location; and
execution circuitry to perform the instruction as per the opcode,
wherein each of the key splits requires less storage than each of the full encryption keys.

2. The processor of claim 1, further comprising a plurality of cores, each comprising an instance of a fetch, decode, and execution circuitry, wherein a least a proper subset of the plurality of cores are to execute plurality of virtual machines, each virtual machine having a unique cryptographic key.

3. The processor of any of claims 1-2, wherein the instruction is associated with a virtual machine being executed by one of a plurality of cores of the processor.

4. The processor of any of claims 1-2, wherein the instruction further has a field to specify write data, and wherein the opcode calls for the processor to encrypt the write data and store encrypted write data to the location identified by the address.

5. The processor of claim 1, wherein the opcode calls for the fetch of read data from the location identified by the address, and to use the cryptographic key to decrypt the read data.

6. The processor of any of claims 1-5, wherein the KDF uses multiple iterations of a pseudorandom function in either a counter mode or a feedback mode.

7. The processor of any of claims 1-6, wherein the root key comprises either 128 bits or 256 bits.

8. A method to be performed by a processor comprising a memory controller to use cryptographic circuitry to encrypt and decrypt data, and storage to store a plurality of key splits and a plurality of full encryption keys, the method comprising:
fetching, using fetch circuitry, an instruction;
decoding, using decode circuitry, the fetched instruction specifying an opcode, an address, and a key identifier, the opcode indicating the processor is to use the address to determine whether to use an explicit key, in which case the processor is to use the key identifier to select a cryptographic key among the plurality of full encryption keys, and, otherwise, the processor is to dynamically derive the cryptographic key by using the key identifier to select a key split among the plurality of key splits, and provide the key split and a root key to a key derivation function (KDF) implemented by the memory controller, which is further to use the cryptographic key with the encryption circuitry to perform a cryptographic operation on an encrypted memory location; and
executing the instruction, using execution circuitry, as per the opcode,
wherein each of the key splits requires less storage than each of the full encryption keys.

9. The method of claim 8, further comprising implementing a plurality of virtual machines using a plurality of cores within the processor, each core comprising an instance of fetch, decode, and execution circuitry, wherein at least one of the plurality of cores implements a plurality of virtual machines, each having a unique cryptographic key.

10. The method of any of claims 8-9, wherein the instruction is associated with a virtual machine being executed by one of a plurality of cores of the processor.

11. The method of any of claims 8-10, wherein the instruction further has a field to specify write data, and wherein the opcode calls for the processor to encrypt the write data and store encrypted write data to the location identified by the address.

12. The method of claim 8, wherein the opcode calls for the fetch of read data from the location identified by the address, and to use the cryptographic key to decrypt the read data.

13. The method of any of claims 8-12, wherein the KDF uses multiple iterations of a pseudorandom function in either a counter mode or a feedback mode.

14. The method of any of claims 8-13, wherein the root key comprises either 128 bits or 256 bits.
